# EUROPEAN PATENT APPLICATION

(11) **EP 2 587 816 A1**
(43) Date of publication of application: **01.05.2013**
(21) Application number: 11798052.4
(22) Date of filing: 17.06.2011
(51) Int. Cl.: H04N 13/04, H04N 7/26

(54) **INFORMATION PROCESSING DEVICE AND INFORMATION PROCESSING METHOD**

(30) Priority: 24.06.2010 JP 2010143401
(71) Applicant: Sony Corporation, Tokyo 108-0075 (JP)
(72) Inventor: IWAMI Hideki, Tokyo 108-0075 (JP); ITAKURA Eisaburo, Tokyo 108-0075 (JP); TSUBAKI Satoshi, Tokyo 108-0075 (JP); KAKITANI Kei, Tokyo 108-0075 (JP); TAKAHASHI Hiroaki, Tokyo 108-0075 (JP)
(74) Representative: Turner, James Arthur
(86) International application number: PCT/JP2011/063868
(87) International publication number: WO 2011/162168

(57) **Abstract**

The present technology relates to an information processing apparatus and an information processing method that can reproduce high-quality stereoscopic images with low delay.

An interpolation data storing unit (112) stores received L image data and R image data as interpolation data. A line-based multiple data link managing unit (105) manages a management table in which the numbers of packet errors in the L image data and the R image data of each line block and the like are registered. Based on the management table, an image data input switching unit (106) outputs the reception data when both of the numbers of packet errors in the L image data and the R image data contained in the reception data are smaller than a threshold value, and outputs interpolation data that corresponds to the reception data, is stored in the interpolation data storing unit (112), and has a smaller number of errors than a threshold value when both of the numbers of errors are not smaller than the threshold value. The present invention can be applied to a relay device that receives stereoscopic image data, for example.

## Description

### TECHNICAL FIELD

The present technology relates to an information processing apparatus and an information processing method, and more particularly, to an information processing apparatus and an information processing method that are designed to reproduce high-quality stereoscopic images with low delay.

### BACKGROUND ART

Today, applications and services are being widely used for transferring image data (particularly, moving image data) via various networks such as the Internet and LANs (Local Area Networks). In a case where image data is transferred via a network, the amount of the image data is normally reduced through an encoding (compressing) operation on the transmitting side before transmission to the network. On the receiving side, the encoded image data is decoded (decompressed), to reproduce the image data.

The most well-known image compression technique is MPEG (Moving Pictures Experts Group). In a case where MPEG is used as the image compression technique at the time of an image data transfer, a MPEG stream generated compliant with MPEG is stored into an IP packet in accordance with the IP (Internet Protocol), and is transferred via a network. The MPEG stream is then received by using a communication terminal such as a PC (Personal Computer), a PDA (Personal Digital Assistant), or a portable telephone device, and the image corresponding to the MPEG stream is displayed on the screen of the communication terminal.

Meanwhile, as for real-time communications designed primarily for image data distributions, such as video-on-demand or live video streaming, video conferences, or video-phone communications, there are such environments that not all image data from the transmitting side reach the receiving side due to jitters in a network, or there are such environments that image data are received with terminals having different capabilities.

Specifically, there are cases where image data transmitted from one transmission source is received by and displayed on a receiving terminal such as a portable telephone device that has a low-resolution display and a low-performance CPU (Central Processing Unit), and at the same time, is also received by and displayed on a receiving terminal such as a desktop personal computer that has a high-resolution display and a high-performance CPU.

When there might be an environment in which image data is received by terminals having different capabilities, a technique called hierarchical coding is used for performing encoding, in a hierarchical fashion, on the image data to be transmitted and received, for example. In a case where image data is subjected to the hierarchical coding and is then transmitted, encoded data for a receiving terminal having a high-resolution display and encoded data for a receiving terminal having a low-resolution display are stored separately from each other on the receiving side, and image size and image quality can be changed as appropriate.

Examples of compression/decompression techniques capable of hierarchical coding include MPEG4 and JPEG2000 (Joint Photographic Experts Group 2000). It is being said that FGS (Fine Granularity Scalability) is to be incorporated as a standard into MPEG4 and be profiled, and the resultant technique will enable scalable distributions both at low bit rates and high bit rates. In JPEG2000 mainly involving wavelet transforms, packets can be hierarchically generated based on spatial resolution by taking advantages of the characteristics of wavelet transforms, or packets can be hierarchically generated based on image quality. Also, in JPEG2000, hierarchized data can be stored as files by Motion JPEG2000 (Part 3), which is compatible with not only still images but also moving images.

Further, as a hierarchical coding technique, a technique mainly involving discrete cosine transforms (DCT) has been suggested. By this technique, image data and the like is divided into high components and low components through a DCT process, and packets are generated by using the divided high components and low components as the hierarchy.

In many cases, real-time properties are required in communications primarily for image data distributions. Therefore, to secure real-time properties, UDP (User Datagram Protocol) is used as the IP-based communication protocol, and RTP (Real-time Transport Protocol) is used in a layer above the UDP. The data format stored in each RTP packet conforms to the individual format defined for each application or each encoding technique. As a communication network, it is possible to use a wireless or wired LAN, or a network of optical communication, xDSL, power-line communication, co-axial cables, or the like.

Those communication networks are becoming faster year by year. Under present circumstances, however, priorities tend to be put on larger display images or higher-quality display images over real-time properties, and the amount of image data to be transmitted is becoming larger. Therefore, in a typical current mainstream system using MPEG or JPEG2000, for example, coding delay (encoding delay + decoding delay) is equivalent to two pictures or more, and the real-time properties are far from sufficient to perform image data distributions.

In view of this, an image compression technique has recently been suggested to divide a picture into line blocks formed with a set of N lines (N being 1 or greater), and compressing the image of each of the line blocks, to shorten delay time (the technique will be hereinafter referred to as the line-based codec). The advantages of the line-based codec are that the delay time is short, and it is possible to achieve high-speed operations and reductions in hardware size, as the amount of information to be processed in each one unit of image compression is small.

The line-based codec is disclosed in Patent Documents 1 to 4, for example. Specifically, Patent Document 1 discloses a communication apparatus that appropriately performs a data gap interpolating operation on each line block of communication data compressed by the line-based codec. Patent Document 2 discloses a communication apparatus that has lower delay and higher processing efficiency in a case where the line-based codec is used as the compression technique. Further, Patent Document 3 discloses a transmission apparatus that restrains degradation of image quality by transmitting the low-frequency components of image data compressed by the line-based codec using wavelet transforms. Patent Document 4 discloses a transmission apparatus that stably achieves synchronization in communications of image data compressed by the line-based codec.

Also, by using the line-based codec, high-quality image data can be transmitted with low delay. Accordingly, the line-based codec is expected to be applied to camera systems for live broadcasting in the future. The applicant has suggested, in Patent Document 5, a camera system that achieved higher transmission efficiency by using a digital modulator.

Meanwhile, a typical stereoscopic image encoding technique is MVC (Multi View Coding). By MVC, an image for the left eye and an image for the right eye are regarded as images independent of each other, and are encoded. Another stereoscopic image encoding technique is a frame sequential technique by which images for the left eye and images for the right eye are alternately encoded as frame images. Here, for ease of explanation, a stereoscopic image is formed with images of two viewpoints: an image for the left eye and an image for the right eye. However, a stereoscopic image can be formed with images of two or more viewpoints.

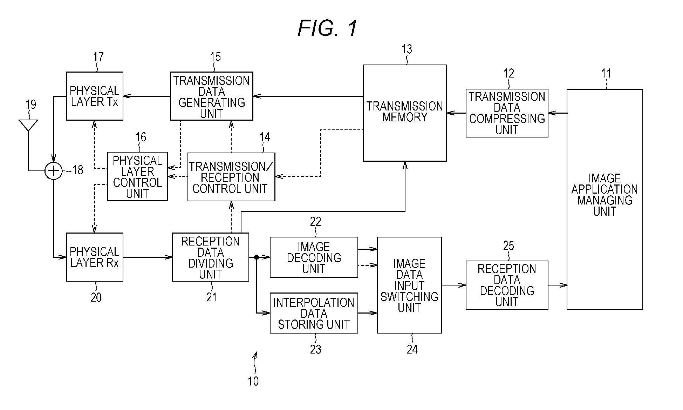

Referring to Fig. 1, an example structure of a conventional communication terminal apparatus 10 that performs an interpolating operation on reception data encoded as MPEG4 or JPEG2000 is described. In the drawing, the arrows with dotted lines indicate the flow of a control signal, and the arrows with solid lines indicate the flow of data.

An image application managing unit 11 receives a transmission request from an application such as an image source, and supplies a transmission data compressing unit 12 with the image data and the like to be transmitted. In accordance with the transmission request from the application, the image application managing unit 11 also performs path control and control on wireless lines by QoS (Quality of Service). Further, the image application managing unit 11 stores image data and the like supplied from a reception data decoding unit 25 into a memory (not shown), and notifies a predetermined application of the receipt. The image application managing unit 11 may also control an image input device such as a CCD (Charge Coupled Device) or a CMOS (Complementary Metal Oxide Semiconductor) sensor.

The transmission data compressing unit 12 compresses the image data supplied from the image application managing unit 11 in MPEG4 or JPEG2000, to reduce the data amount of the image data. The transmission data compressing unit 12 then outputs the compressed image data to a transmission memory 13.

The transmission memory 13 stores the image data input from the transmission data compressing unit 12. The transmission memory 13 also stores transfer data that is supplied from a reception data dividing unit 21 and is to be transferred to another terminal. The transmission memory 13 may also store data not to be transferred to another terminal. The transmission memory 13 also notifies a transmission/reception control unit 14 of the data storage state.

In accordance with the storage state supplied from the transmission memory 13, the transmission/reception control unit 14 requests a transmission data generating unit 15 to start an operation. The transmission/reception control unit 14 also controls a physical layer control unit 16 in accordance with a MAC (Media Access Control) protocol such as TDMA (Time Division Multiple Access) or CSMA (Carrier Sense Multiple Access). The transmission/reception control unit 14 may perform media access control called PSMA (Preamble Sense Multiple Access) that is similar to CSMA and is designed to identify packets through correlations among preambles, instead of carriers. Based on information supplied from the reception data dividing unit 21, the transmission/reception control unit 14 controls the physical layer control unit 16.

In accordance with the request from the transmission/reception control unit 14, the transmission data generating unit 15 turns the image data and transfer data stored in the transmission memory 13 into a packet, and starts the operation to generate a transmission packet. The transmission data generating unit 15 supplies the generated transmission packet to a physical layer Tx 17. The transmission data generating unit 15 also controls the physical layer control unit 16 where necessary.

Under the control of the transmission/reception control unit 14 or the transmission data generating unit 15, the physical layer control unit 16 controls the physical layer Tx 17 and a physical layer Rx 20.

The physical layer Tx 17 starts an operation in accordance with a request from the physical layer control unit 16, and outputs the transmission packet supplied from the transmission data generating unit 15 to a transmission/reception switching unit 18.

The transmission/reception switching unit 18 has the function to switch between data transmission and reception. When a transmission packet is supplied from the physical layer Tx 17, the transmission packet is transmitted via an antenna 19. When a packet is received via the antenna 19, the packet is supplied to the physical layer Rx 20.

The physical layer Rx 20 starts an operation in accordance with a request from the physical layer control unit 16, and supplies a packet received via the antenna 19 to the reception data dividing unit 21.

The reception data dividing unit 21 analyzes the packet supplied from the physical layer Rx 20, extracts the data containing the image data required by the image application managing unit 11, and supplies the extracted data as the reception data to an image decoding unit 22 and an interpolation data storing unit 23. The reception data dividing unit 21 also analyzes the packet supplied from the physical layer Rx 20, and in accordance with information such as a routing table, extracts transfer data that is data required to be transmitted to another terminal. The reception data dividing unit 21 supplies the transfer data to the transmission memory 13. The reception data dividing unit 21 also extracts information required by the transmission/reception control unit 14 from the packet, and supplies the extracted information to the transmission/reception control unit 14.

The image decoding unit 22 analyzes the reception data supplied from the reception data dividing unit 21 for each field or for each set of fields, and supplies the analysis results to an image data input switching unit 24. The image decoding unit 22 also analyzes the reception data, and from the field numbers allotted to the image data contained in the reception data, recognizes the reception data to be reproduced. The image decoding unit 22 supplies the reception data to be reproduced to the image data input switching unit 24.

The interpolation data storing unit 23 stores the reception data supplied from the reception data dividing unit 21 as interpolation data.

Based on the analysis results supplied from the image decoding unit 22, the image data input switching unit 24 selects the reception data supplied from the image decoding unit 22 or the interpolation data stored in the interpolation data storing unit 23. The image data input switching unit 24 then supplies the selected image data or interpolation data to the reception data decoding unit 25.

Here, since the analysis results are obtained for each set of frames or for each field as described above, the shortest selection switching unit used by the image data input switching unit 24 is a field. Therefore, in MPEG for correlating fields or frames, a long period of time is required to switch decoded images.

The reception data decoding unit 25 decodes the reception data or interpolation data supplied from the image data input switching unit 24 in MPEG4 or JPEG2000, and supplies the resultant image data to the image application managing unit 11. The reception data decoding unit 25 is designed to be re-initialized only at intervals of length equivalent to a field or longer.

A basic operation of the communication terminal apparatus 10 illustrated in Fig. 1 is now described.

At the time of reception, data transmitted from a transmitter station on the other end of the communication is received by the antenna 19, the transmission/reception switching unit 18, and the physical layer Rx 20, and the reception data dividing unit 21 extracts the reception data containing the image data required by the image application managing unit 11. The separated reception data is analyzed by the image decoding unit 22, and if there are no errors, for example, is decoded by the reception data decoding unit 25. If there is an error, on the other hand, the interpolation data stored in the interpolation data storing unit 23, instead of the reception data, is decoded by the reception data decoding unit 25. Under the control of the image application managing unit 11, the decoded image data is output to a display unit such as a display (not shown). In this specification, "errors" include not only data errors but also missing data.

At the time of transmission, image data to be transmitted is supplied from the image application managing unit 11, is compressed by the transmission data compressing unit 12, and is stored into the transmission memory 13. The stored image data is read and turned into a transmission packet by the transmission data generating unit 15, and is transmitted to the transmitter station on the other end of the communication via the physical layer Tx 17, the transmission/reception switching unit 18, and the antenna 19.

### CITATION LIST

### PATENT DOCUMENTS

Patent Document 1: Japanese Patent Application Laid-Open No. 2007-311948
Patent Document 2: Japanese Patent Application Laid-Open No. 2008-28541
Patent Document 3: Japanese Patent Application Laid-Open No. 2008-42222
Patent Document 4: Japanese Patent Application Laid-Open No. 2009-278545
Patent Document 5: Japanese Patent No. 3617087

### SUMMARY OF THE INVENTION

### PROBLEMS TO BE SOLVED BY THE INVENTION

As described above, the communication apparatus disclosed in Patent Document 1 appropriately performs a data gap interpolating operation on each line block of communication data compressed by the line-based codec. Accordingly, high-quality images can be reproduced with low delay.

However, the communication apparatus disclosed in Patent Document 1 is designed for two-dimensional image communications, and cannot cope with stereoscopic image communications.

Specifically, in a case where a communication object is a stereoscopic image formed with an image for the left eye and an image for the right eye that are captured by different cameras, the receiving side needs to perform phase focusing between the image for the left eye and the image for the right eye, and take measures against line failures. More specifically, in a case where the image for the left eye and the image for the right eye that form a stereoscopic image are transmitted through different channels from each other, the delay time and the number of errors differ between the image for the left eye and the image for the right eye. Also, in a case where an error has occurred in one of the image for the left eye and the image for the right eye, the stereoscopic effect is lost from the received image. As a result, the existence of the stereoscopic effect varies in the time-axis direction, giving users unpleasant feelings.

Therefore, on the receiving side, it is necessary to recognize the delay time and the number of errors of each of the image for the left eye and the image for the right eye, and perform an operation to manage the delay time and the number of errors in each encoding operation.

However, the communication apparatus disclosed in Patent Document 1 is not designed for such operations. Therefore, it is difficult to reproduce high-quality stereoscopic images with low delay on the receiving side.

The present technology has been made in view of such circumstances, and the object thereof is to enable low-delay reproduction of high-quality stereoscopic images.

### SOLUTIONS TO PROBLEMS

An information processing apparatus of one aspect of the present technology includes: a receiving unit that receives multi-view image data on a line block basis, the multi-view image data being encoded by a line-based codec and forming stereoscopic image data; a storing unit that stores interpolation data, the interpolation data being the multi-view image data received by the receiving unit; and an image output unit that outputs the predetermined amount of the interpolation data corresponding to the predetermined amount of the multi-view image data when the number of errors in image data of at least one viewpoint in the predetermined amount of the multi-view image data received by the receiving unit is equal to or larger than a first threshold value, the predetermined amount of the interpolation data being stored in the storing unit, the number of errors in the predetermined amount of the interpolation data being smaller than a second threshold value.

An information processing method of the one aspect of the present technology is compatible with the information processing apparatus of the one aspect of the present technology.

In the one aspect of the present technology, reception of multi-view image data on a line block basis is controlled, the multi-view image data being encoded by a line-based codec and forming stereoscopic image data. The received multi-view image data is stored as interpolation data into a storing unit. In a case where the number of errors in image data of at least one viewpoint in a predetermined amount of the received multi-view image data is equal to or larger than a first threshold value, the predetermined amount of the interpolation data that corresponds to the predetermined amount of the multi-view image data, is stored in the storing unit, and has a smaller number of errors than a second threshold value is output.

### EFFECTS OF THE INVENTION

According to one aspect of the present technology, high-quality stereoscopic images can be reproduced with low delay.

### BRIEF DESCRIPTION OF DRAWINGS

Fig. 1 is a block diagram showing an example structure of a conventional communication terminal apparatus.
Fig. 2 is a block diagram showing an example structure of a first embodiment of a communication system to which the present technology is applied.
Fig. 3 is a block diagram showing an example structure of the relay device shown in Fig. 2.
Fig. 4 is a block diagram showing an example structure of the transmission data compressing unit shown in Fig. 3.
Fig. 5 is a block diagram showing an example structure of the wavelet transforming unit shown in Fig. 4.
Fig. 6 is a diagram showing coefficient data.
Fig. 7 is a diagram showing the data format of reception data.
Fig. 8 is a block diagram showing an example structure of the line-based interpolating unit shown in Fig. 3.
Fig. 9 is a diagram showing an example of a management table.
Fig. 10 is a flowchart for explaining a management table updating operation.
Fig. 11 is a flowchart for explaining an interpolation data storing operation.
Fig. 12 is a flowchart for explaining an interpolation data reading operation.
Fig. 13 is a flowchart for explaining a switching operation.
Fig. 14 is a flowchart for explaining another example of an interpolation data storing operation.
Fig. 15 is a flowchart for explaining another example of an interpolation data reading operation.
Fig. 16 is a block diagram showing an example structure of a second embodiment of a communication system to which the present technology is applied.
Fig. 17 is a block diagram showing an example structure of the imaging devices shown in Fig. 16.
Fig. 18 is a flowchart for explaining an encoding control operation.
Fig. 19 is a block diagram showing an example structure of the relay device 122 shown in Fig. 16.
Fig. 20 is a block diagram showing an example structure of the line-based interpolating unit shown in Fig. 19.
Fig. 21 is a flowchart for explaining an interpolation data reading operation.
Fig. 22 is a block diagram showing an example structure of a third embodiment of a communication system to which the present technology is applied.
Fig. 23 is a block diagram showing an example structure of the relay device shown in Fig. 22.
Fig. 24 is a block diagram showing an example structure of the line-based interpolating unit shown in Fig. 23.
Fig. 25 is a flowchart for explaining an audio processing operation.
Fig. 26 is a block diagram showing another example structure of the line-based interpolating unit shown in Fig. 3.
Fig. 27 is a flowchart for explaining a scene changing operation.
Fig. 28 is a block diagram showing yet another example structure of the line-based interpolating unit shown in Fig. 3.
Fig. 29 is a diagram showing an example of a management table.
Fig. 30 is a flowchart for explaining a switching operation.
Fig. 31 is a diagram showing an example structure of an embodiment of a computer.

### MODE FOR CARRYING OUT THE INVENTION

### <First Embodiment>

### [Example Structure of a First Embodiment of a Communication System]

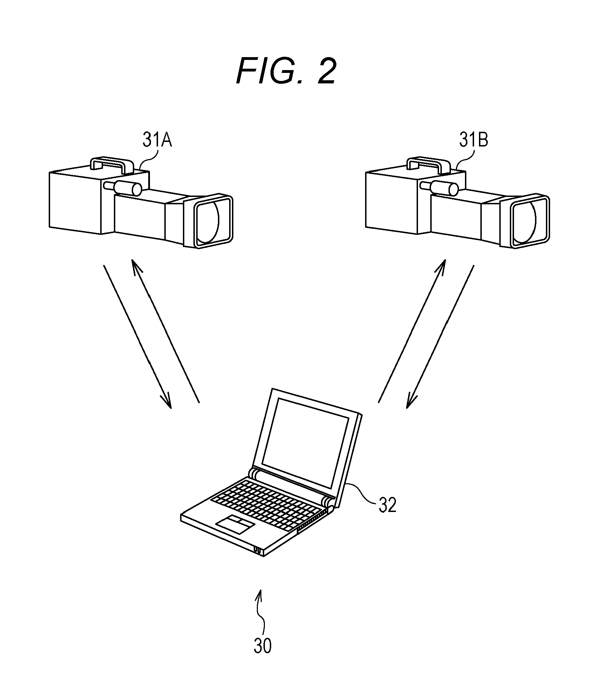

Fig. 2 is a block diagram showing an example structure of a first embodiment of a communication system to which the present technology is applied.

The communication system 30 in Fig. 2 is formed with two imaging devices 31A and 31B, and a relay device 32.

The imaging device 31A of the communication system 30 is formed with a video camera, for example. The imaging device 31A images an object, and compresses the resultant image data by a line-based codec. The imaging device 31A wirelessly transmits the compressed image data as the image data for the left eye (hereinafter referred to as the L image data) in stereoscopic image data to the relay device 32. The imaging device 31A also wirelessly receives image data transmitted from the relay device 32.

The imaging device 31B is formed with a video camera, for example. The imaging device 31B images the object from a different viewpoint from that of the imaging device 31A, and compresses the resultant image data by a line-based codec. The imaging device 31B wirelessly transmits the compressed image data as the image data for the right eye (hereinafter referred to as the R image data) in the stereoscopic image data to the relay device 32. The imaging device 31B also wirelessly receives image data transmitted from the relay device 32.

The imaging device 31A and the imaging device 31B are not necessarily video cameras, and may be other devices having imaging functions, such as digital still cameras, PCs, portable telephone devices, or game machines. Hereinafter, the imaging device 31A and the imaging device 31B will be collectively referred to as the imaging devices 31, unless required to be specifically distinguished from each other.

The relay device 32 is formed with a PC, for example. The relay device 32 wirelessly receives the L image data transmitted from the imaging device 31A and the R image data transmitted from the imaging device 31B. The relay device 32 decodes the received L image data and R image data by a technique compatible with the line-based codec, and based on the L image data and R image data obtained as a result of the decoding, corrects color shifts and a slight optical axis shift between the cameras, before displaying a stereoscopic image. The relay device 32 also transmits predetermined image data to the imaging devices 31.

The imaging devices 31 and the relay device 32 can be made to operate in peer-to-peer fashion, or may be made to operate as part of a network.

### [Example Structure of the Relay Device]

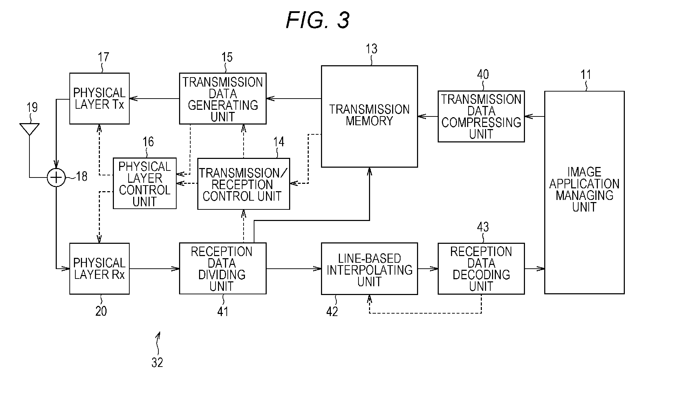

Fig. 3 is a block diagram showing an example structure of the relay device 32 shown in Fig. 2.

In the structure illustrated in Fig. 3, the same components as those in Fig. 1 are denoted by the same reference numerals as those in Fig. 1. The explanations that have already been made will not be repeated.

The structure of the relay device 32 of Fig. 3 differs from the structure of Fig. 1 mainly in that the transmission data compressing unit 12 is replaced with a transmission data compressing unit 40, the reception data dividing unit 21 is replaced with a reception data dividing unit 41, the image decoding unit 22, the interpolation data storing unit 23, and the image data input switching unit 24 are replaced with a line-based interpolating unit 42, and the reception data decoding unit 25 is replaced with a reception data decoding unit 43.

The relay device 32 receives a packet of the L image data of each line block compressed by a line-based codec from the imaging device 31A, and receives a packet of the R image data from the imaging device 31B. Based on those packets, a stereoscopic image is displayed.

Specifically, the transmission data compressing unit 40 of the relay device 32 compresses the image data supplied from an image application managing unit 11 by a line-based codec at a predetermined encoding rate, to reduce the data amount of the image data. Like the transmission data compressing unit 12 of Fig. 1, the transmission data compressing unit 40 then outputs the compressed image data to a transmission memory 13.

The reception data dividing unit 41 analyzes the packet supplied from a physical layer Rx 20, extracts the data containing the line-block-based image data required by the image application managing unit 11, and supplies the extracted data as the reception data to the line-based interpolating unit 42. Like the reception data dividing unit 21 of Fig. 1, the reception data dividing unit 41 also analyzes the packet supplied from the physical layer Rx 20, and in accordance with information such as a routing table, extracts transfer data that needs to be transmitted to another terminal. Like the reception data dividing unit 21, the reception data dividing unit 41 supplies the transfer data to the transmission memory 13. Like the reception data dividing unit 21, the reception data dividing unit 41 further extracts information required by a transmission/reception control unit 14 from the packet, and supplies the extracted information to the transmission/reception control unit 14.

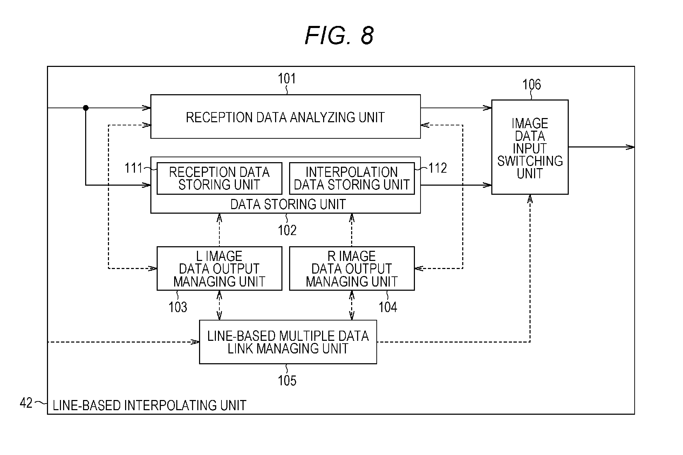

The line-based interpolating unit 42 performs an interpolating operation on the reception data supplied from the reception data dividing unit 41. Specifically, the line-based interpolating unit 42 supplies the reception data decoding unit 43 with interpolated data that is the reception data supplied from the reception data dividing unit 41, or reception data stored as interpolation data. The line-based interpolating unit 42 will be described later in detail, with reference to Fig. 8.

The reception data decoding unit 43 decodes the interpolated data supplied from the line-based interpolating unit 42 by a technique compatible with the line-based codec, and supplies the resultant image data to the image application managing unit 11.

The reception data decoding unit 43 further determines the gap ratio in the interpolated data. Specifically, the reception data decoding unit 43 determines the gap ratio that is the occurrence frequency of forcibly decoded data (dummy data) contained in each of the L image data and the R image data as the interpolated data. The forcibly decoded data is data that is placed in an error portion of the interpolated data. The reception data decoding unit 43 supplies the line-based interpolating unit 42 with decoding information that contains the gap ratio and the line block number allotted to the line block being currently decoded.

The structures of the imaging device 31A and the imaging device 31B are the same as the structure of the relay device 32, except that the line-based interpolating unit 42 is not included or the line-based interpolating unit 42 is replaced with the line-based interpolating unit disclosed in Patent Document 1. Therefore, explanations of those structures are skipped herein.

### [Example Structure of the Transmission Data Compressing Unit]

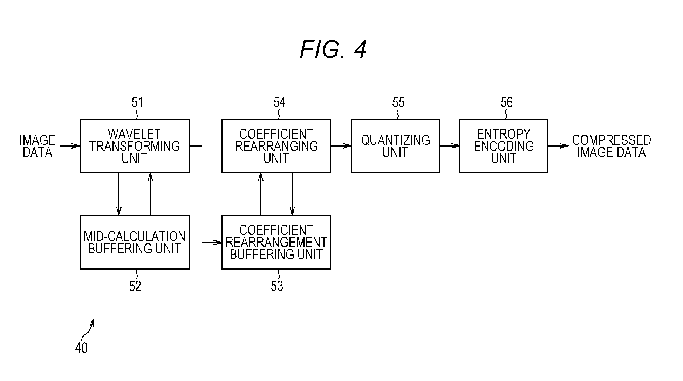

Fig. 4 is a block diagram showing an example structure of the transmission data compressing unit 40 of Fig. 3.

As shown in Fig. 4, the transmission data compressing unit 40 includes a wavelet transforming unit 51, a mid-calculation buffering unit 52, a coefficient rearrangement buffering unit 53, a coefficient rearranging unit 54, a quantizing unit 55, and an entropy coding unit 56.

Image data that is input to the transmission data compressing unit 40 is temporarily stored into the mid-calculation buffering unit 52 via the wavelet transforming unit 51.

The wavelet transforming unit 51 performs wavelet transforms on the image data stored in the mid-calculation buffering unit 52. The wavelet transforming unit 51 will be described later in detail. The wavelet transforming unit 51 supplies the coefficient data obtained through the wavelet transforms to the coefficient rearrangement buffering unit 53.

The coefficient rearranging unit 54 reads the coefficient data from the coefficient rearrangement buffering unit 53 in predetermined order (wavelet inverse transforming order, for example), and supplies the read coefficient data to the quantizing unit 55.

The quantizing unit 55 quantizes the supplied coefficient data by a predetermined technique, and supplies the resultant coefficient data to the entropy coding unit 56.

The entropy coding unit 56 encodes the supplied coefficient data by a predetermined entropy coding technique such as Huffman coding or arithmetic coding. The entropy coding unit 56 supplies the resultant data as compressed image data to the transmission memory 13 (Fig. 3).

### [Description of the Wavelet Transforming Unit]

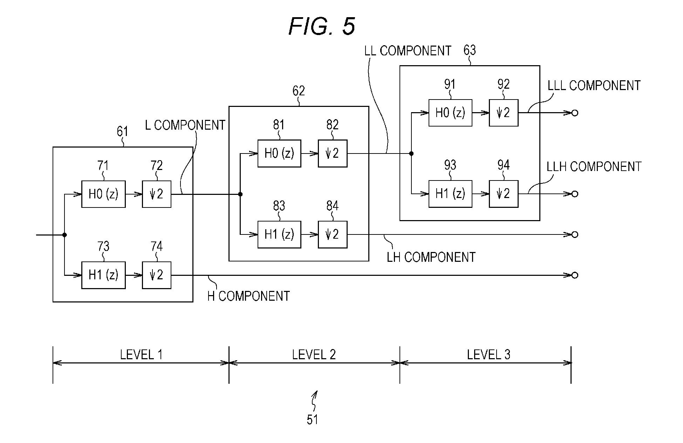

Fig. 5 is a block diagram showing an example structure of the wavelet transforming unit 51 shown in Fig. 4.

In the example shown in Fig. 5, the number of levels in wavelet transforms is 3 (level 1 through level 3), and the wavelet transforming unit 51 divides image data into a lower component and a higher component, and further divides only the lower component in a hierarchical fashion. Fig. 5 shows blocks that perform wavelet transforms on one-dimensional image data (the horizontal component of image data, for example), for the sake of simplicity. However, those blocks can be expanded to two-dimensional ones, to cope with two-dimensional image data (the vertical component and the horizontal component of image data).

A level-1 circuit unit 61 includes a low-pass filter 71, a down sampler 72, a high-pass filter 73, and a down sampler 74. A level-2 circuit unit 62 includes a low-pass filter 81, a down sampler 82, a high-pass filter 83, and a down sampler 84. A level-3 circuit unit 63 includes a low-pass filter 91, a down sampler 92, a high-pass filter 93, and a down sampler 94.

The image data read from the mid-calculation buffering unit 52 of Fig. 4 is subjected to a band division by the low-pass filter 71 (transfer function H0(z)) and the high-pass filter 73 (transfer function H1(z)) of the circuit unit 61. The lower component obtained through the band division by the low-pass filter 71 is supplied to the down sampler 72, and the higher component obtained through the band division by the high-pass filter 73 is supplied to the down sampler 74. The resolution of each of the components is decimated by 1/2.

The signal of the lower component (the L (Low) component in the drawing) decimated by the down sampler 72 is further subjected to a band division by the low-pass filter 81 (transfer function H0(z)) and the high-pass filter 83 (transfer function H1(z)) of the circuit unit 62. The lower component obtained through the band division by the low-pass filter 81 is supplied to the down sampler 82, and the higher component obtained through the band division by the high-pass filter 83 is supplied to the down sampler 84. The resolution of each of the components is decimated by 1/2.

The signal of the lower component (the LL component in the drawing) decimated by the down sampler 82 is further subjected to a band division by the low-pass filter 91 (transfer function H0(z)) and the high-pass filter 93 (transfer function H1(z)) of the circuit unit 63. The lower component obtained through the band division by the low-pass filter 91 is supplied to the down sampler 92, and the higher component obtained through the band division by the high-pass filter 93 is supplied to the down sampler 94. The resolution of each of the components is decimated by 1/2.

As the band division and decimation are repeatedly performed on a lower component in the above manner a number of times equal to the number of levels, the lower component is hierarchized into the same number of hierarchical components as the number of the levels. That is, in the example shown in Fig. 5, band division is performed only three times, which is equivalent to the number of the levels. As a result, the lower component (the L component in the drawing) decimated by the down sampler 74 is hierarchized into the three hierarchical components of the higher component (the LH component in the drawing) decimated by the down sampler 84, the higher component (the LLH component in the drawing) decimated by the down sampler 94, and the lower component (the LLL component in the drawing) decimated by the down sampler 92.

The higher component (the H (High) component in the drawing) decimated by the down sampler 74 remains as a hierarchical component. The H component, the LH component, the LLH component, and the LLL component in a hierarchy are output as coefficient data to the coefficient rearrangement buffering unit 53 (Fig. 4).

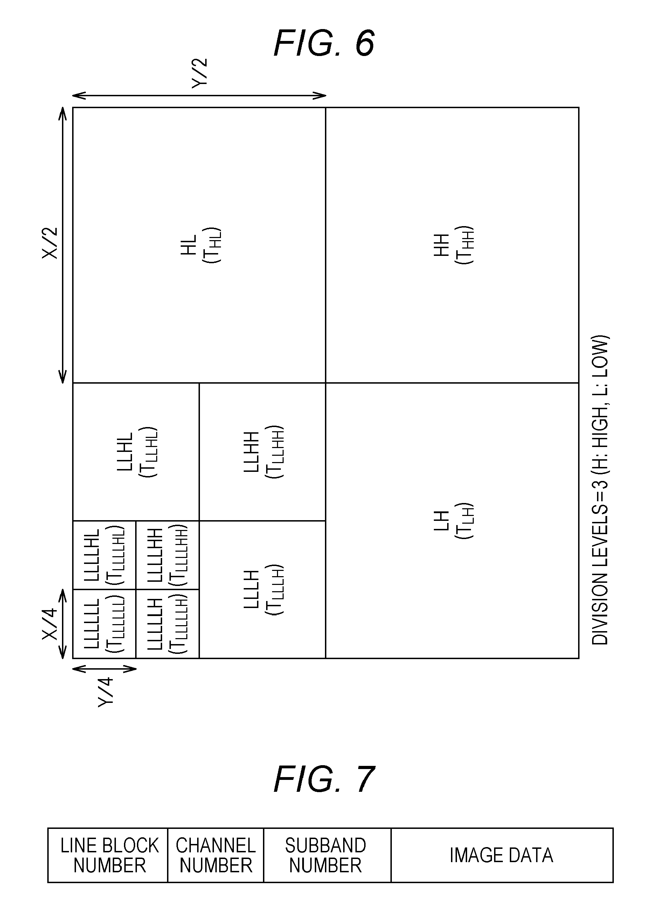

Fig. 6 is a diagram showing the coefficient data obtained as a result of wavelet transforms performed on two-dimensional image data up to level 3.

The notation of L and H in Fig. 6 differs from the notation of L and H in Fig. 5, which concerns one-dimensional image data. In the example illustrated in Fig. 6, band divisions are performed on the horizontal component and the vertical component of image data, and therefore, the band components of both the horizontal component and the vertical component need to be shown. Therefore, the two band components of the horizontal component and the vertical components are successively shown in Fig. 6. For example, "HH" means that the band components of the horizontal component and the vertical component are H components, and "HL" means that the band component of the horizontal component is an H component while the band component of the vertical component is an L component. Also, "LLLH" means that the horizontal component is an LL component, and the vertical component is an LH component.

As shown in Fig. 6, in a band division of the horizontal component and the vertical component at level 1, the four components of an LL component, an LH component, an HL component, and an HH component are first generated. In a band division of the horizontal component and the vertical component at level 2, the LL component is again subjected to a band division, and an LLLL component, an LLHL component, an LLLH component, and an LLHH component are generated. Further, in a band division of the horizontal component and the vertical component at level 3, the LLLL component is again subjected to a band division, and an LLLLLL component, an LLLLHL component, an LLLLLH component, and an LLLLHH component are generated. Hereinafter, each one component obtained through a band division will be referred to as a subband.

In a line-based codec, the number of lines of image data necessary for generating coefficient data of one line of the lowest component subbands (the LLLLLL component, the LLLLHL component, the LLLLLH component, and the LLLLHH component in the example illustrated in Fig. 6) are set as a line block, and coefficient data is generated for each line block. Since the resolution is decimated by 1/2 at each level as described above, the number of lines constituting a line block is the Nth power of 2 in a case where the number of the division levels is N, for example. In a case where the number of the division levels is 4, for example, the number of lines constituting a line block is 16, which is the fourth power of 2.

In a wavelet transforming operation, hierarchical coding (progressive coding) can be performed in accordance with various progressive coding types including not only the progressive coding depending on frequencies but also progressive coding depending on spatial resolutions, progressive coding depending on SNR (Signal to Noise Ratio) or image quality, or progressive coding depending on color components (RGB or YCbCr).

Such progressive coding is often used for image distributions via the Internet and the like, and enables a stepwise decoding and displaying operation in which coarse image data is first output from the decoding side, for example, and finer images are sequentially output for display.

For example, the reception data decoding unit 43 first decodes reception data of a lower component, causes a display (not shown) to display a coarse, schematic stereoscopic image in a short period of time, then decodes reception data of higher components, and causes the display to gradually display a finer stereoscopic image.

### [Description of a Data Format of Reception Data]

Fig. 7 is a diagram showing the data format of reception data received from the imaging devices 31.

As shown in Fig. 7, the reception data is formed with image data, and the line block number, the channel number, and the subband number, which correspond to the image data.

A line block number is a number for identifying a line block in an image. A channel number is a number for identifying the channel of reception data. A channel number allotted to L image data is different from a channel number allotted to R image data. Accordingly, by detecting the channel number in reception data, it is possible to determine whether the image data contained in the reception data is L image data or R image data. Further, a subband number is a number for identifying a subband.

### [Example Structure of the Line-Based Interpolating Unit]

Fig. 8 is a block diagram showing an example structure of the line-based interpolating unit 42 shown in Fig. 3.

In the drawing, the arrows with dotted lines indicate the flow of a control signal, and the arrows with solid lines indicate the flow of data.

The line-based interpolating unit 42 of Fig. 8 includes a reception data analyzing unit 101, a data storing unit 102, an L image data output managing unit 103, an R image data output managing unit 104, a line-based multiple data link managing unit 105, and an image data input switching unit 106 (an image output unit).

The reception data analyzing unit 101 of the line-based interpolating unit 42 stores the reception data supplied from the reception data dividing unit 41 of Fig. 3. The reception data analyzing unit 101 also analyzes the reception data, to recognize the line block number contained in the reception data. The reception data analyzing unit 101 further analyzes the reception data, and based on the channel number contained in the reception data, determines whether the image data contained in the reception data is L image data or R image data. The reception data analyzing unit 101 analyzes the reception data, to detect the number of packet errors in the reception data and the arrival time of the reception data.

In a case where the image data contained in the reception data is L image data, the reception data analyzing unit 101 supplies the L image data output managing unit 103 with L image data information that contains the line block number, the number of packet errors, and the arrival time of the reception data. In a case where the image data contained in the reception data is R image data, on the other hand, the reception data analyzing unit 101 supplies the R image data output managing unit 104 with R image data information that contains the line block number, the number of packet errors, and the arrival time of the reception data.

Further, the reception data analyzing unit 101 reads the reception data containing the L image data having the line block number designated by the L image data output managing unit 103, and also reads the reception data containing the R image data having the line block number designated by the R image data output managing unit 104.

In a case where there is an error at least in one of the line blocks of the L image data and the R image data contained in the read image data, the reception data analyzing unit 101 inserts forcibly decoded data into a portion of the L image data or the R image data, the portion corresponding to the error portion. The reception data analyzing unit 101 then supplies the image data input switching unit 106 with the reception data having the forcibly decoded data inserted thereto.

The forcibly decoded data may be generated by obtaining an estimate from image data highly correlated with the previous and next line blocks with the use of an image filter, for example, or may be image data of an intermediate color.

The data storing unit 102 is formed with a reception data storing unit 111 for storing image data of one field, and an interpolation data storing unit 112. The reception data storing unit 111 is formed with a buffer having a stop function, for example. Based on an instruction from the L image data output managing unit 103 and an instruction from the R image data output managing unit 104, the reception data storing unit 111 stores the reception data from the reception data dividing unit 41 or stops the storing.

In a case where reception data of one field is stored into the reception data storing unit 111, the interpolation data storing unit 112 reads and stores the reception data of one field. The interpolation data storing unit 112 reads, from the stored reception data, the reception data that contains the line block number designated by the L image data output managing unit 103, and the reception data that contains the line block number designated by the R image data output managing unit 104. The interpolation data storing unit 112 then supplies the read reception data as interpolation data to the image data input switching unit 106.

The L image data output managing unit 103 supplies the L image information supplied from the reception data analyzing unit 101, to the line-based multiple data link managing unit 105. Based on an instruction from the line-based multiple data link managing unit 105, the L image data output managing unit 103 also instructs the data storing unit 102 to perform storing. In accordance with an instruction from the line-based multiple data link managing unit 105, the L image data output managing unit 103 further instructs the data storing unit 102 and the reception data analyzing unit 101 to have a predetermined line block number as the line block number of the object being currently read.

The R image data output managing unit 104 supplies the R image information supplied from the reception data analyzing unit 101, to the line-based multiple data link managing unit 105. Based on an instruction from the line-based multiple data link managing unit 105, the R image data output managing unit 104 also instructs the data storing unit 102 to perform storing. In accordance with an instruction from the line-based multiple data link managing unit 105, the R image data output managing unit 104 further instructs the data storing unit 102 and the reception data analyzing unit 101 to have a predetermined line block number as the line block number of the object being currently read.

The line-based multiple data link managing unit 105 stores and manages a management table for managing L image information and R image information on a field basis. The line-based multiple data link managing unit 105 registers, in the management table, the L image information supplied from the L image data output managing unit 103 and the R image information supplied from the R image data output managing unit 104. Based on the management table, the line-based multiple data link managing unit 105 also instructs the image data input switching unit 106 to perform selection on a line block basis.

Based on decoding information supplied from the reception data decoding unit 43 of Fig. 3, the line-based multiple data link managing unit 105 also instructs the L image data output managing unit 103 and the R image data output managing unit 104 to perform reading. Based on the management table, for example, the line-based multiple data link managing unit 105 further instructs the L image data output managing unit 103 and the R image data output managing unit 104 to perform storing.

In accordance with an instruction from the line-based multiple data link managing unit 105, the image data input switching unit 106 selects either the reception data supplied from the reception data analyzing unit 101 or the interpolation data supplied from the data storing unit 102, and outputs the selected data as the interpolated data to the reception data decoding unit 43 of Fig. 3.

The reception data stored in the reception data analyzing unit 101 and the data storing unit 102 may be reception data of all the subbands, or may be reception data of several subbands counted from the lowest component. In the latter case, the storage capacity required for storing the reception data can be small. Also, packet errors can be made hard to notice in an image displayed based on the interpolated data.

### [Example of the Management Table]

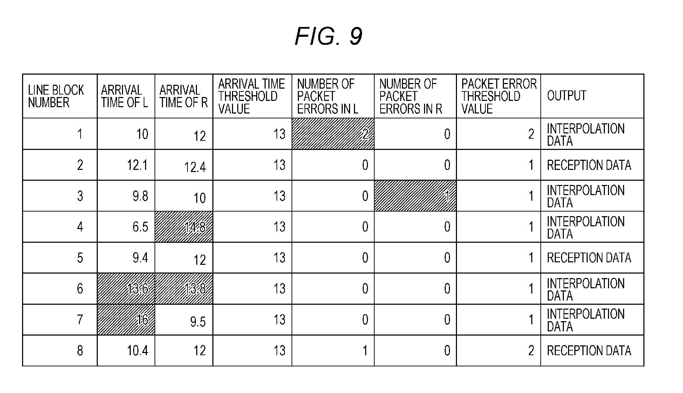

Fig. 9 is a diagram showing an example of the management table.

As shown in Fig. 9, the management table contains the following items: "line block number", "arrival time of L", "arrival time of R", "arrival time threshold value (a third threshold value)", "number of packet errors in L", "number of packet errors in R", "packet error number threshold value (a first threshold value)", and "output". Information about the respective items is registered for each line block in each field.

In the example shown in Fig. 9, as the information about the line block having the line block number "1" in a predetermined field, "1" is registered and associated with the item "line block number". Associated with the item "arrival time of L", the arrival time "10" of the L image data in the line block with the line block number "1" is registered. Also, associated with the item "arrival time of R", the arrival time "12" of the R image data in the line block with the line block number "1" is registered. Associated with the item "arrival time threshold value", the arrival time threshold value "13" is registered.

Also, associated with the item "number of packet errors in L", the number "2" of packet errors in the L image data in the line block with the line block number "1" is registered. Associated with the item "number of packet errors in R", the number "0" of packet errors in the R image data in the line block having the line block number "1" is registered. Further, the packet error number threshold value "2" is associated with the item "packet error number threshold value".

As the information associated with the item "output", the information indicating the data to be output to the reception data decoding unit 43 of Fig. 3, or the data selected by the image data input switching unit 106, is registered. Specifically, in a case where the arrival times and the numbers of packet errors of the L image data and the R image data are smaller than the threshold values, "reception data" is registered. In cases other than that, "interpolation data" is registered.

For example, the value of the arrival time of each of the L image data and the R image data in the line block with the line block number "1" is smaller than the arrival time threshold value "13", but the number of packet errors in the L image data is equal to or larger than the packet error number threshold value "2". Therefore, "interpolation data" is registered as the information associated with the item "output" of the line block number "1".

The information associated with the items "arrival time threshold value" and "packet error number threshold value" may be registered beforehand, or may be registered in accordance with an instruction from a user.

### [Description of Operations of the Relay Device]

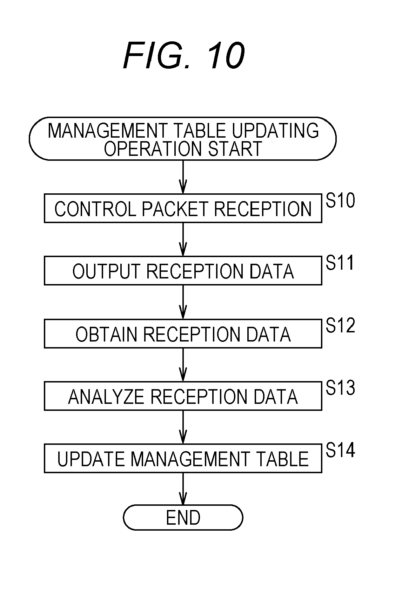

Fig. 10 is a flowchart for explaining a management table updating operation to be performed by the relay device 32 of Fig. 3.

In step S10 of Fig. 10, the physical layer control unit 16 controls packet reception by the physical layer Rx 20 (a receiving unit). As a result, a packet transmitted from the imaging devices 31 is received via the antenna 19, the transmission/reception switching unit 18, and the physical layer Tx 17, and is supplied to the reception data dividing unit 41.

In step S11, the reception data dividing unit 41 analyzes the received packet, extracts the data containing the line-block-based image data required by the image application managing unit 11, and supplies the extracted data as reception data to the line-based interpolating unit 42.

In step S12, the reception data analyzing unit 101 and the data storing unit 102 (Fig. 8) of the line-based interpolating unit 42 obtain the reception data supplied from the reception data dividing unit 41. The reception data analyzing unit 101 then stores the reception data.

In step S13, the reception data analyzing unit 101 analyzes the reception data. As a result, the reception data analyzing unit 101 recognizes the line block number in the reception data, and determines whether the image data contained in the reception data is L image data or R image data. The reception data analyzing unit 101 detects the number of packet errors in the reception data and the arrival time of the reception data.

In a case where the image data is L image data, the reception data analyzing unit 101 supplies L image data information, which contains the line block number, the number of packet errors, and the arrival time of the reception data, to the line-based multiple data link managing unit 105 via the L image data output managing unit 103. In a case where the image data is R image data, on the other hand, the reception data analyzing unit 101 supplies the line block number, the number of packet errors, and the arrival time of the reception data, to the line-based multiple data link managing unit 105 via the R image data output managing unit 104.

In step S14, based on the L image data information supplied from the L image data output managing unit 103 and the R image data information supplied from the R image data output managing unit 104, the line-based multiple data link managing unit 105 updates the management table. The operation then comes to an end.

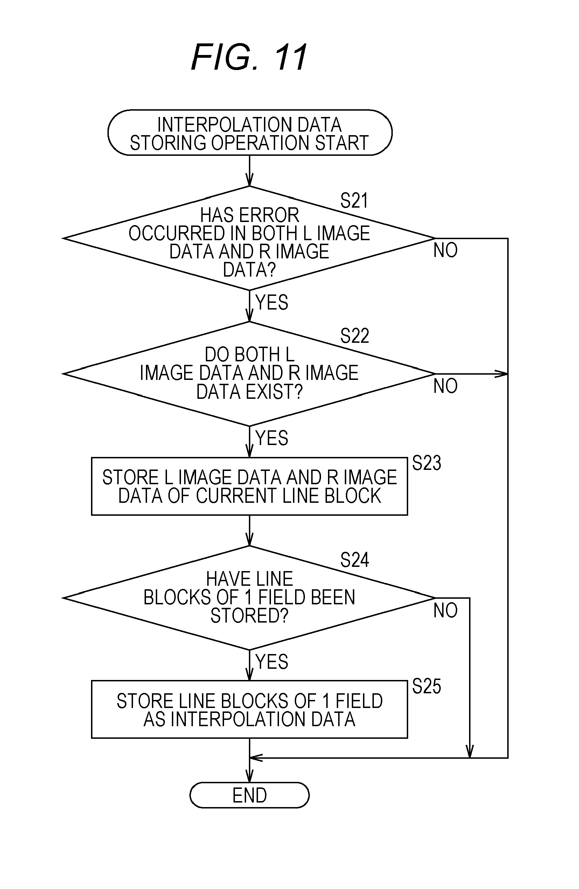

Fig. 11 is a flowchart for explaining an interpolation data storing operation to be performed by the relay device 32 of Fig. 3. The interpolation data storing operation targets the respective line blocks, and is performed on each of the line blocks.

In step S21, the line-based multiple data link managing unit 105 refers to the management table, to determine whether an error has occurred in both the L image data and the R image data in the current line block. Specifically, the line-based multiple data link managing unit 105 determines whether the values corresponding to the items "number of packet errors in L" and "number of packet errors in R" associated with the line block number allotted to the current line block are smaller than a predetermined threshold value (a second threshold value) in the management table. This threshold value may be the same as or different from the value corresponding to the item "packet error number threshold value".

If both of the values corresponding to the items "number of packet errors in L" and "number of packet errors in R" are determined to be smaller than the predetermined threshold value, the line-based multiple data link managing unit 105 determines that no errors have occurred in both the L image data and the R image data in the current line block. If at least one of the values corresponding to the items "number of packet errors in L" and "number of packet errors in R" is determined to be equal to or larger than the predetermined threshold value, the line-based multiple data link managing unit 105 determines that an error has occurred in at least one of the L image data and the R image data in the current line block.

If it is determined in step S21 that no errors have occurred in both the L image data and the R image data in the current line block, the operation moves on to step S22.

In step S22, the line-based multiple data link managing unit 105 refers to the management table, to determine whether there exist both the L image data and the R image data in the current line block. Specifically, the line-based multiple data link managing unit 105 determines whether the values corresponding to the items "arrival time of L" and "arrival time of R" associated with the line block number allotted to the current line block are smaller than a predetermined threshold value (a fourth threshold value) in the management table. This threshold value may be the same as or different from the value corresponding to the item "arrival time threshold value".

If both of the values corresponding to the items "arrival time of L" and "arrival time of R" are determined to be smaller than the predetermined threshold value, the line-based multiple data link managing unit 105 determines that there exist both the L image data and the R image data in the current line block. If at least one of the values corresponding to the items "arrival time of L" and "arrival time of R" is determined to be equal to or larger than the predetermined threshold value, the line-based multiple data link managing unit 105 determines that at least one of the L image data and the R image data in the current line block does not exist.

If it is determined in step S22 that there exist both the L image data and the R image data in the current line block, the line-based multiple data link managing unit 105 instructs the L image data output managing unit 103 and the R image data output managing unit 104 to store the current line block. As a result, the L image data output managing unit 103 and the R image data output managing unit 104 each instruct the reception data storing unit 111 to store the current line block.

In step S23, in accordance with instructions from the L image data output managing unit 103 and the R image data output managing unit 104, the reception data storing unit 111 stores the L image data and the R image data of the current line block as interpolation data. If the number of packet errors in the interpolation data is not 0, forcibly decoded data may be inserted into the interpolation data in the same manner as in the operation of the reception data analyzing unit 101.

In step S24, the interpolation data storing unit 112 determines whether the L image data and the R image data of the lines blocks of one field have been stored in the reception data storing unit 111. If it is determined in step S24 that the L image data and the R image data of the line blocks of one field have been stored, the operation moves on to step S25, and the interpolation data storing unit 112 stores interpolation data that is the L image data and the R image data of the line block of the one field stored in the reception data storing unit 111. The operation then comes to an end.

If it is determined in step S24 that the L image data and the R image data of the line blocks of one field have not been stored in the reception data storing unit 111, the operation comes to an end.

If it is determined in step S21 that an error has occurred in at least one of the L image data and the R image data in the current line block, or if it is determined in step S22 that at least one of the L image data and the R image data in the current line block does not exist, the L image data and the R image data of the current line block are not stored, and the operation comes to an end.

In the above described interpolation data storing operation, if an error has occurred in at least one of the L image data and the R image data, or if at least one of the L image data and the R image data does not exist, neither the L image data nor the R image data is stored as interpolation data. Accordingly, the stored interpolation data is synchronized with the L image data and the R image data. As a result, even if the interpolation data, instead of reception data, is decoded, the stereoscopic effect of the reproduced image is not adversely affected. That is, a high-quality stereoscopic image can be reproduced, without any degradation in the stereoscopic effect.

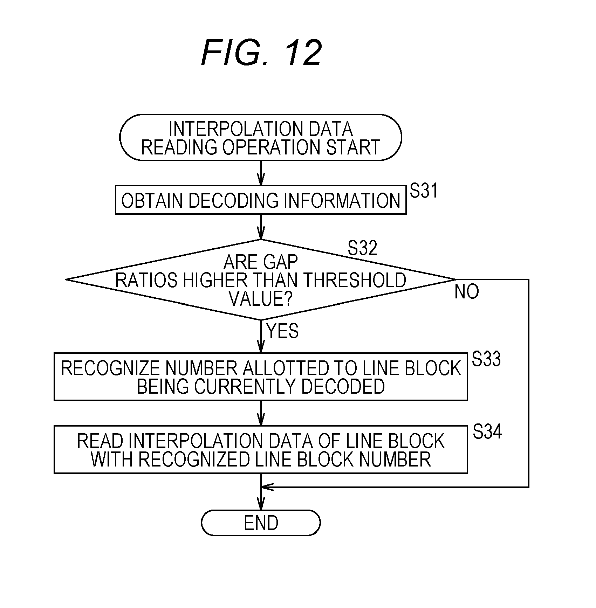

Fig. 12 is a flowchart for explaining an interpolation data reading operation to be performed by the relay device 32 of Fig. 3. This interpolation data reading operation is started when a decoding operation is started by the reception data decoding unit 43 of Fig. 3, for example.

In step S31 of Fig. 12, the line-based multiple data link managing unit 105 obtains decoding information from the reception data decoding unit 43.

In step S32, the line-based multiple data link managing unit 105 determines whether at least one of the gap ratios in the L image data and the R image data contained in the decoding information is higher than a threshold value. As the threshold value, a value suited for the relay device 32 is set in advance.

If at least one of the gap ratios in the L image data and the R image data is determined to be higher than the threshold value in step S32, the operation moves on to step S33, and the line-based multiple data link managing unit 105 recognizes the line block number that is contained in the decoding information and is allotted to the line block being currently decoded. The line-based multiple data link managing unit 105 then notifies the interpolation data storing unit 112 of the line block number via the L image data output managing unit 103 and the R image data output managing unit 104.

In step S34, the interpolation data storing unit 112 reads the interpolation data of the line blocks with the line block numbers designated by the L image data output managing unit 103 and the R image data output managing unit 104, and supplies the interpolation data to the image data input switching unit 106. The operation then comes to an end.

If both of the gap ratios in the L image data and the R image data are determined not to be higher than the threshold value in step S32, the operation comes to an end.

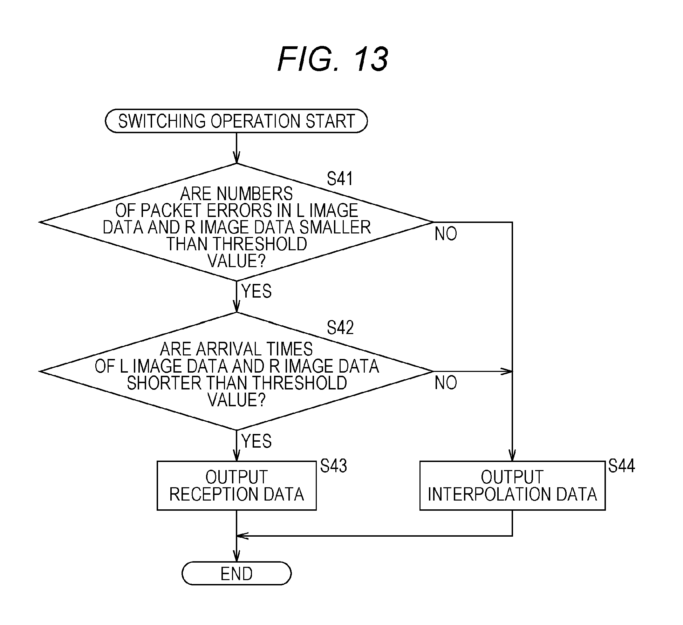

Fig. 13 is a flowchart for explaining a switching operation to be performed by the relay device 32 of Fig. 3. The switching operation targets the respective line blocks, and is performed on each of the line blocks.

In step S41 of Fig. 13, the line-based multiple data link managing unit 105 refers to the management table, to determine whether the number of packet errors in the L image data and the number of packet errors in the R image data in the current line block are both smaller than a threshold value. Specifically, the line-based multiple data link managing unit 105 determines whether both of the values corresponding to the items "number of packet errors in L" and "number of packet errors in R" associated with the line block number allotted to the current line block are smaller than the threshold value corresponding to the item "packet error number threshold value" in the management table.

If both of the numbers of packet errors in the L image data and the R image data are determined to be smaller than the threshold value in step S41, the operation moves on to step S42.

In step S42, the line-based multiple data link managing unit 105 refers to the management table, to determine whether the values of the arrival time of the L image data and the arrival time of the R image data in the current line block are both smaller than a threshold value. Specifically, the line-based multiple data link managing unit 105 determines whether both of the values corresponding to the items "arrival time of L" and "arrival time of R" associated with the line block number allotted to the current line block are smaller than the threshold value corresponding to the item "arrival time threshold value" in the management table.

If both of the values of the arrival time of the L image data and the arrival time of the R image data are determined to be smaller than the threshold value in step S42, the line-based multiple data link managing unit 105 instructs the image data input switching unit 106 to select the reception data. In step S43, the image data input switching unit 106 outputs the reception data received from the reception data analyzing unit 101, and the operation comes to an end.

If at least one of the numbers of packet errors in the L image data and the R image data is determined not to be smaller than the threshold value in step S41, or if at least one of the values of the arrival time of the L image data and the arrival time of the R image data is determined not to be smaller than the threshold value in step S42, the line-based multiple data link managing unit 105 instructs the image data input switching unit 106 to select the interpolation data.

In step S44, the image data input switching unit 106 outputs the interpolation data received from the interpolation data storing unit 112, and the operation comes to an end.

In the above described switching operation, the data to be decoded can be switched between reception data and interpolation data on a line block basis. Accordingly, even if an error occurs in a line block located in the middle of one field, interpolation data can be used for the line block, and the stability of the reproduced image can be increased.

In a case where interpolation data is used for a line block located in the middle of one field, only the image according to predetermined line blocks in the one field corresponds to the line blocks in the previous field, but there are no problems in terms of display, as long as the video image has field or frame intervals of 24 P or longer. However, problems in display depend on the specs required in the communication system 30, and the field or frame intervals in the communication system 30 are not necessarily 24 P or longer.

### [Description of Other Example Operations of the Relay Device]

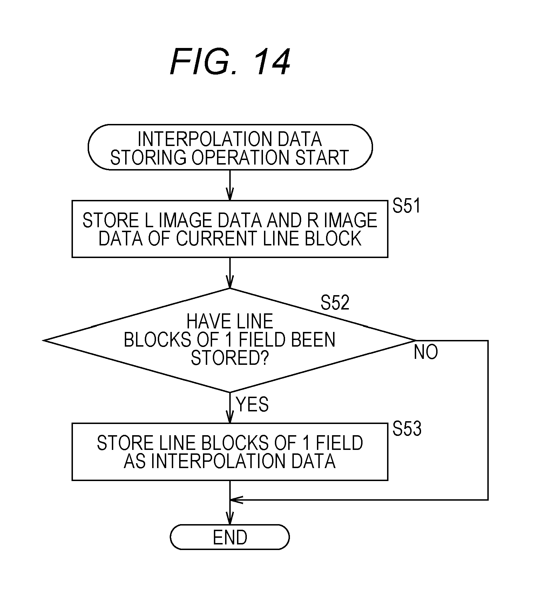

Fig. 14 is a flowchart for explaining another example of an interpolation data storing operation to be performed by the relay device 32 of Fig. 3. The interpolation data storing operation targets the respective line blocks, and is performed on each of the line blocks.

In the interpolation data storing operation of Fig. 14, all reception data is stored into the reception data storing unit 111 of Fig. 8.

Specifically, in step S51 of Fig. 14, based on a subject line block storing instruction supplied from the line-based multiple data link managing unit 105 via the L image data output managing unit 103 and the R image data output managing unit 104, the reception data storing unit 111 stores the L image data and the R image data of the current line block.

The procedures in steps S52 and S53 are the same as the procedures in steps S24 and S25 of Fig. 10, and therefore, explanation of them is not repeated herein.

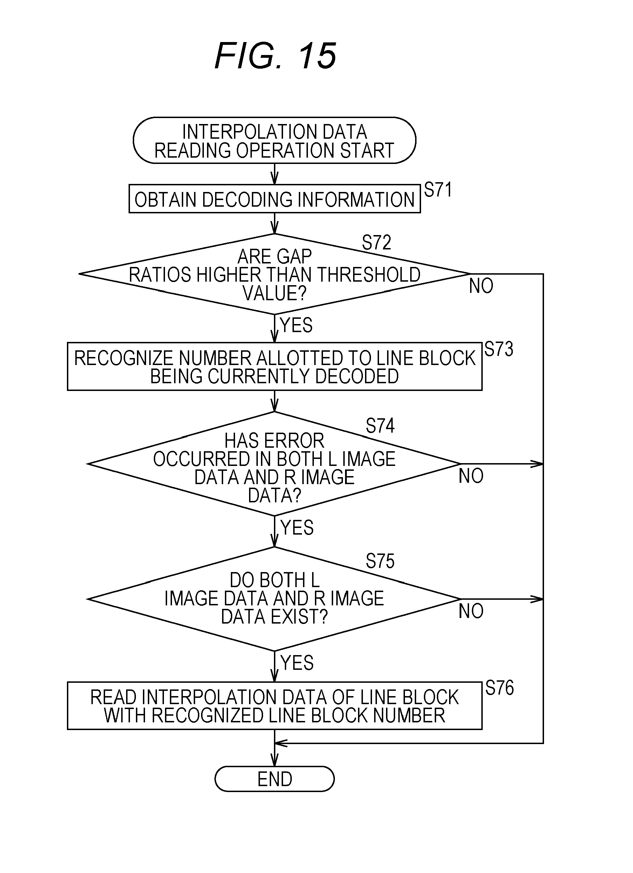

Fig. 15 is a flowchart for explaining an interpolation data reading operation to be performed in a case where the interpolation data storing operation of Fig. 14 is performed. This interpolation data reading operation is started when a decoding operation is started by the reception data decoding unit 43 of Fig. 3, for example.

In the interpolation data reading operation of Fig. 15, interpolation data is read, only when the numbers of packet errors in the L image data and the R image data and the values of the arrival time of the L image data and the arrival time of the R image data in the line block being currently decoded are smaller than the threshold values.

Specifically, in steps S71 and S72 of Fig. 15, the same procedures as those in steps S31 and S32 of Fig. 12 are carried out. In step S73, line-based multiple data link managing unit 105 recognizes the line block number that is contained in the decoding information and is allotted to the line block being currently decoded.

In step S74, the line-based multiple data link managing unit 105 refers to the management table, to determine whether an error has occurred in both the L image data and the R image data in the line block being currently decoded, as in the procedure in step S21 of Fig. 11.

If it is determined in step S74 that no errors have occurred in both the L image data and the R image data in the line block being currently decoded, the operation moves on to step S75.

In step S75, the line-based multiple data link managing unit 105 refers to the management table, to determine whether there exist both the L image data and the R image data in the line block being currently decoded, as in the procedure in step S22 of Fig. 11.

If it is determined in step S75 that there exist both the L image data and the R image data in the line block being currently decoded, the line-based multiple data link managing unit 105 notifies the interpolation data storing unit 112 of the line block number recognized in step S73, via the L image data output managing unit 103 and the R image data output managing unit 104. The operation then moves on to step S76.

In step S76, the interpolation data storing unit 112 reads the interpolation data of the line blocks with the line block numbers designated by the L image data output managing unit 103 and the R image data output managing unit 104, and supplies the interpolation data to the image data input switching unit 106. The operation then comes to an end.

If it is determined in step S74 that an error has occurred in at least one of the L image data and the R image data in the line block being currently decoded, or if it is determined in step S75 that at least one of the L image data and the R image data of the line block being currently decoded does not exist, the L image data and the R image data of the line block being currently decoded are not read, and the operation comes to an end.

As described above, in the communication system 30, the imaging devices 31 decode image data by a line-based codec, and transmit the image data. If the number of packet errors in the image data or the value of the arrival time of the image data is equal to or larger than a threshold value, the relay device 32 does not make a request for resending, but performs an interpolation with interpolation data. Accordingly, the relay device 32 can reproduce stereoscopic image data with only short delay. Also, as the imaging devices 31 decode image data by a line-based codec and transmit the image data, the storage capacity required for a decoding operation in the relay device 32 is smaller than that in the case of a picture-based codec.

In the communication system 30, if both of the numbers of packet errors in L image data and R image data as reception data, and both of the values of the arrival time of the L image data and the arrival time of the R image data are not smaller than threshold values, the relay device 32 reproduces interpolation data in which both of the numbers of packet errors in the L image data and the R image data and both of the values of the arrival times are smaller than the threshold values, instead of the reception data. Accordingly, even in a case where the communication environment is so poor that not all the stereoscopic image data on the transmitting side reaches the receiving side due to jitters or the like in the transmission path, or that the amount of delay in the transmission path is large, high-quality stereoscopic image data can be reproduced.

As described above, the communication system 30 can reproduce high-quality stereoscopic image data with only short delay. Accordingly, the communication system 30 is suitable for high-speed switching operations for real-time images that are imperative in live broadcasting.

### <Second Embodiment>

### [Example Structure of a Second Embodiment of a Communication System]

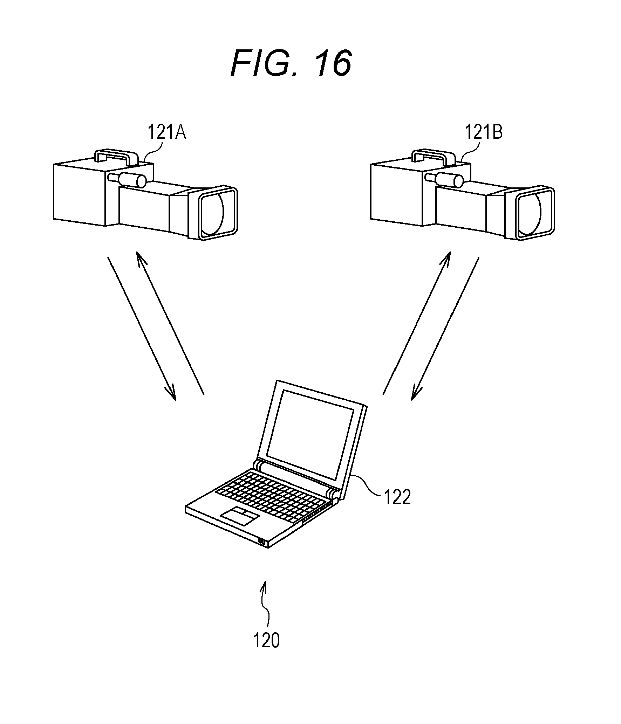

Fig. 16 is a block diagram showing an example structure of a second embodiment of a communication system to which the present technology is applied.

The communication system 120 of Fig. 16 is formed with two imaging devices 121A and 121B, and a relay device 122.

Like the imaging device 31A of Fig. 2, the imaging device 121A of the communication system 120 is formed with a video camera or the like. Like the imaging device 31A, the imaging device 121A images an object, and compresses the resultant image data by a line-based codec. Like the imaging device 31A, the imaging device 121A wirelessly transmits the compressed image data as L image data to the relay device 122. The imaging device 121A also wirelessly receives image data transmitted from the relay device 122, a command for requesting a change in the encoding rate (hereinafter referred to as the change request command), and the like. In accordance with the change request command, the imaging device 121A changes the encoding rate.

Like the imaging device 31B of Fig. 2, the imaging device 121B is formed with a video camera or the like. Like the imaging device 31B, the imaging device 121B images the object from a different viewpoint from that of the imaging device 121A, and compresses the resultant image data by a line-based codec. Like the imaging device 31B, the imaging device 121B wirelessly transmits the compressed image data as R image data to the relay device 122. The imaging device 121B also wirelessly receives image data transmitted from the relay device 122, a change request command, and the like. In accordance with the change request command, the imaging device 121B changes the encoding rate.

Hereinafter, the imaging device 121A and the imaging device 121B will be collectively referred to as the imaging devices 121, unless required to be specifically distinguished from each other.

Like the relay device 32 of Fig. 2, the relay device 122 is formed with a PC, for example. Like the relay device 32, the relay device 122 wirelessly receives the L image data transmitted from the imaging device 121A and the R image data transmitted from the imaging device 121B. Like the relay device 32, the relay device 122 decodes the received L image data and R image data by a technique compatible with the line-based codec, and based on the L image data and R image data obtained as a result of the decoding, displays a stereoscopic image.

Also, based on the gap ratio in the received L image data, the relay device 122 transmits a change request command to the imaging device 121A. Based on the gap ratio in the received R image data, the relay device 122 transmits a change request command to the imaging device 121B. Like the relay device 32, the relay device 122 further transmits predetermined image data to the imaging devices 121.

The imaging devices 121 and the relay device 122 can be made to operate in peer-to-peer fashion, or may be made to operate as part of a network.

### [Example Structure of an Imaging Device]

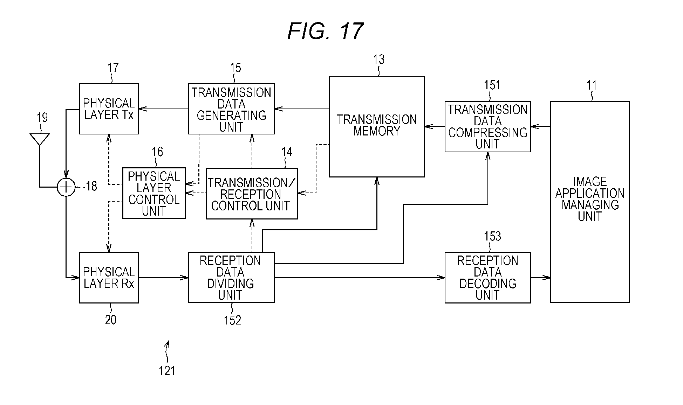

Fig. 17 is a block diagram showing an example structure of the imaging devices 121 shown in Fig. 16.

In the structure illustrated in Fig. 17, the same components as those in Fig. 1 are denoted by the same reference numerals as those in Fig. 1. The explanations that have already been made will not be repeated.

The structure of the imaging device 121 of Fig. 17 differs from the structure of Fig. 1 mainly in that the transmission data compressing unit 12 is replaced with a transmission data compressing unit 151, the reception data dividing unit 21 is replaced with a reception data dividing unit 152, the image decoding unit 22, the interpolation data storing unit 23, and the image data input switching unit 24 are not provided, and the reception data decoding unit 25 is replaced with a reception data decoding unit 153.

The imaging device 121 receives a change request command from the relay device 122, and in accordance with the change request command, changes the encoding rate.

Specifically, the transmission data compressing unit 151 of the imaging device 121 compresses image data supplied from an image application managing unit 11 by a line-based codec at a predetermined encoding rate, to reduce the data amount of the image data. The transmission data compressing unit 151 then outputs the compressed image data to a transmission memory 13. The transmission data compressing unit 151 also updates the encoding rate in image data compression to an encoding rate supplied from the reception data dividing unit 152.

The reception data dividing unit 152 analyzes a packet supplied from a physical layer Rx 20, extracts the data containing the line-block-based image data required by the image application managing unit 11, and supplies the extracted data as reception data to the reception data decoding unit 153. The reception data dividing unit 152 analyzes the packet supplied from the physical layer Rx 20, extracts a change request command, and supplies the encoding rate requested by the change request command to the transmission data compressing unit 151.

Like the reception data dividing unit 21 of Fig. 1, the reception data dividing unit 152 also analyzes the packet supplied from the physical layer Rx 20, and in accordance with information such as a routing table, extracts transfer data that needs to be transmitted to another terminal. Like the reception data dividing unit 21, the reception data dividing unit 152 then supplies the transfer data to the transmission memory 13. Like the reception data dividing unit 21, the reception data dividing unit 152 further extracts information required by a transmission/reception control unit 14 from the packet, and supplies the extracted information to the transmission/reception control unit 14.

The reception data decoding unit 153 decodes the reception data supplied from the reception data dividing unit 152 by a technique compatible with the line-based codec, and supplies the resultant image data to the image application managing unit 11.

In the imaging device 121, the line-based interpolating unit disclosed in above described Patent Document 1 may be provided between the reception data dividing unit 152 and the reception data decoding unit 153, so that interpolating operations are performed on image data transmitted from the relay device 122.

### [Description of an Operation of the Imaging Device]

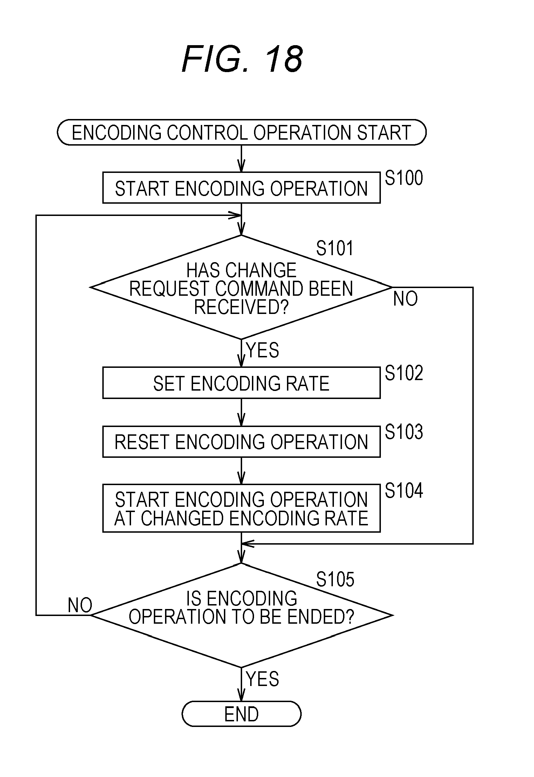

Fig. 18 is a flowchart for explaining an encoding control operation to be performed by the imaging device 121 shown in Fig. 17. This encoding control operation is started when image data is supplied from the image application managing unit 11 to the transmission data compressing unit 151, for example.

In step S100, the transmission data compressing unit 151 initializes an encoding operation to compress image data supplied from the image application managing unit 11 by a line-based codec at a predetermined encoding rate, and then starts the encoding operation.

In step S101, the reception data dividing unit 152 analyzes a packet supplied from the physical layer Rx 20, to determine whether a change request command has been received.

If it is determined in step S101 that a change request command has been received, the reception data dividing unit 152 supplies the encoding rate requested by the change request command to the transmission data compressing unit 151. In step S102, the transmission data compressing unit 151 sets the encoding rate supplied from the reception data dividing unit 152 as the encoding rate in the encoding operation.

In step S103, the transmission data compressing unit 151 resets the encoding operation. As a result, it is possible to cope with a change in input clock or the like caused by the change in the encoding rate.

In step S104, the transmission data compressing unit 151 starts the encoding operation at the changed encoding rate. The operation then moves on to step S105.

If it is determined in step S101 that a change request command has not been received, the operation moves on to step S105.

In step S105, the transmission data compressing unit 151 determines whether to end the encoding operation, or whether no more image data is being supplied from the image application managing unit 11, for example. If the encoding operation is determined not to be ended in step S105, the operation returns to step S101, and the procedures in steps S101 through S105 are repeated until the encoding operation is determined to be ended.

If the encoding operation is determined to be ended in step S105, the transmission data compressing unit 151 ends the encoding operation.

### [Example Structure of the Relay Device]

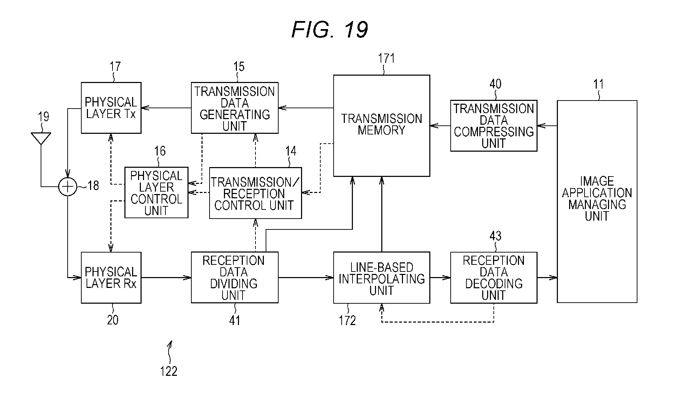

Fig. 19 is a block diagram showing an example structure of the relay device 122 shown in Fig. 16.

In the structure illustrated in Fig. 19, the same components as those in Fig. 3 are denoted by the same reference numerals as those in Fig. 3. The explanations that have already been made will not be repeated.

The structure of the relay device 122 of Fig. 19 differs from the structure of Fig. 3 mainly in that the transmission memory 13 is replaced with a transmission memory 171, and the line-based interpolating unit 42 is replaced with a line-based interpolating unit 172.

In the relay device 122, the transmission memory 171 stores image data input from the transmission data compressing unit 12, like the transmission memory 13 of Fig. 1 or 3. Like the transmission memory 13, the transmission memory 171 also stores transfer data that is supplied from the reception data dividing unit 21. Like the transmission memory 13, the transmission memory 171 notifies the transmission/reception control unit 14 of the data storage state.

The transmission memory 171 also stores a change request command that is supplied from the line-based interpolating unit 172 for the imaging device 121A, and a change request command that is supplied for the imaging device 121B. The change request command for the imaging device 121A is supplied like image data and reception data to the transmission data generating unit 15, and is turned into a packet. The change request command is then supplied to the imaging device 121A via the physical layer Tx 17, the transmission/reception switching unit 18, and an antenna 19. Likewise, the change request command for the imaging device 121B is transmitted to the imaging device 121B.

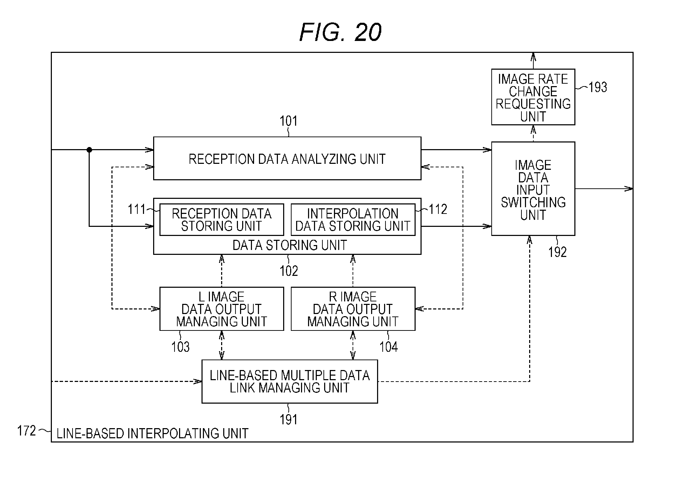

Like the line-based interpolating unit 42 of Fig. 3, the line-based interpolating unit 172 performs an interpolating operation on the reception data supplied from the reception data dividing unit 41. Based on the gap ratios contained in decoding information supplied
from the reception data decoding unit 43, the line-based interpolating unit 172 also generates change request commands for the imaging devices 121, and supplies the change request commands to the transmission memory 171. The line-based interpolating unit 172 will be described later in detail, with reference to Fig. 20.

### [Example Structure of the Line-Based Interpolating Unit]

Fig. 20 is a block diagram showing an example structure of the line-based interpolating unit 172 shown in Fig. 19.

In the structure illustrated in Fig. 20, the same components as those in Fig. 8 are denoted by the same reference numerals as those in Fig. 8. The explanations that have already been made will not be repeated.

The structure of the line-based interpolating unit 172 of Fig. 20 differs from the structure of Fig. 8 mainly in that the line-based multiple data link managing unit 105 and the image data input switching unit 106 are replaced with a line-based multiple data link managing unit 191 and an image data input switching unit 192, and an image rate change requesting unit 193 is newly added.

In the line-based interpolating unit 172 of Fig. 20, the line-based multiple data link managing unit 191 stores and manages a management table, like the line-based multiple data link managing unit 105 of Fig. 8. Like the line-based multiple data link managing unit 105, the line-based multiple data link managing unit 191 registers, in the management table, L image information supplied from an L image data output managing unit 103 and R image information supplied from an R image data output managing unit 104. Like the line-based multiple data link managing unit 105, the line-based multiple data link managing unit 191 also instructs an image data input switching unit 106 to perform selection on a line block basis, in accordance with the management table.

Like the line-based multiple data link managing unit 105, the line-based multiple data link managing unit 105 also instructs the L image data output managing unit 103 and the R image data output managing unit 104 to perform reading, based on decoding information supplied from the reception data decoding unit 43 of Fig. 19. Like the line-based multiple data link managing unit 105, the line-based multiple data link managing unit 191 further instructs the L image data output managing unit 103 and the R image data output managing unit 104 to perform storing, based on the management table, for example.

Based on the decoding information, the line-based multiple data link managing unit 191 also instructs the image data input switching unit 192 to transmit change request commands to the imaging device 121A and the imaging device 121B.

Like the image data input switching unit 106 of Fig. 8, in accordance with the instruction from the line-based multiple data link managing unit 105, the image data input switching unit 192 selects either reception data supplied from a reception data analyzing unit 101 or interpolation data supplied from a data storing unit 102, and outputs the selected data as interpolated data to the reception data decoding unit 43 of Fig. 19.

In accordance with the instruction from the line-based multiple data link managing unit 191, the image data input switching unit 192 also instructs the image rate change requesting unit 193 to transmit the change request commands to the imaging device 121A and the imaging device 121B.

In accordance with the instruction from the image data input switching unit 192, the image rate change requesting unit 193 generates the change request commands for the imaging device 121A and the imaging device 121B, and transmits the change request commands to the transmission memory 171 of Fig. 19.

### [Description of Operations of the Relay Device]

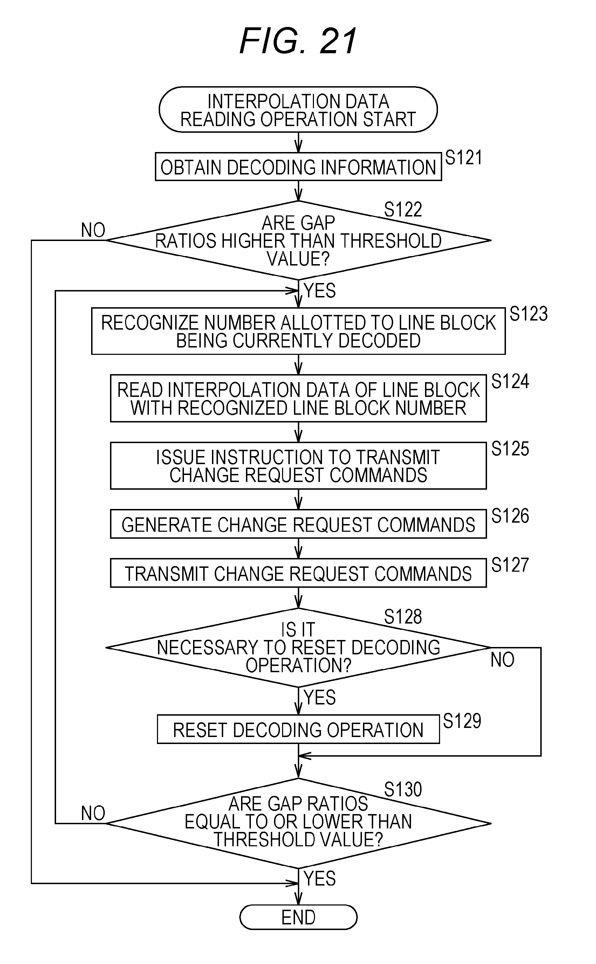

Fig. 21 is a flowchart for explaining an interpolation data reading operation to be performed by the relay device 122 of Fig. 19. This interpolation data reading operation is started when a decoding operation is started by the reception data decoding unit 43 of Fig. 19, for example. It should be noted that the relay device 122 performs the interpolation data storing operation shown in Fig. 11.

In step S121, the line-based multiple data link managing unit 191 obtains decoding information from the reception data decoding unit 43.

In step S122, the line-based multiple data link managing unit 191 determines whether at least one of the gap ratios in the L image data and the R image data contained in the decoding information is higher than a threshold value. That is, the line-based multiple data link managing unit 191 determines whether at least one of the numbers of packet errors in the L image data and the R image data as the interpolated data is larger than a predetermined threshold value (the third threshold value).

If at least one of the gap ratios in the L image data and the R image data is determined to be higher than the threshold value in step S122, the operation moves on to step S123, and the line-based multiple data link managing unit 191 recognizes the line block number that is contained in the decoding information and is allotted to the line block being currently decoded. The line-based multiple data link managing unit 191 then notifies the interpolation data storing unit 112 of the line block number via the L image data output managing unit 103 and the R image data output managing unit 104.

In step S124, the interpolation data storing unit 112 reads the interpolation data of the line blocks with the line block numbers designated by the L image data output managing unit 103 and the R image data output managing unit 104, and supplies the interpolation data to the image data input switching unit 106.

In step S125, the line-based multiple data link managing unit 191 instructs the image rate change requesting unit 193, via the image data input switching unit 192, to transmit the change request commands to the imaging device 121A and the imaging device 121B. Specifically, if the gap ratio in the L image data is higher than the threshold value, the line-based multiple data link managing unit 191 issues an instruction to transmit the change request command to the imaging device 121A. If the gap ratio in the R image data is higher than the threshold value, the line-based multiple data link managing unit 191 issues an instruction to transmit the change request command to the imaging device 121B.

Here, the line-based multiple data link managing unit 191 may issue an instruction to transmit a change request command having a predetermined amount of change, or may issue an instruction to transmit a change request command having an amount of change that depends on gap ratios.

In step S126, in accordance with the instruction supplied from the line-based multiple data link managing unit 191 via the image data input switching unit 192, the image rate change requesting unit 193 generates the change request commands for the imaging devices 121. The image rate change requesting unit 193 then supplies the change request commands to the transmission memory 171 of Fig. 19 to store.

In step S127, the transmission data generating unit 15 turns the change request commands for the imaging devices 121 stored in the transmission memory 171 into packets, and transmits the packets to the imaging devices 121 via the physical layer Tx 17, the transmission/reception switching unit 18, and the antenna 19.

In step S128, the reception data decoding unit 43 determines whether the decoding operation needs to be reset.

Specifically, if the encoding rate changes in the middle of a decoding operation, a change is normally caused in the decoding timing, and therefore, it is necessary to reset the decoding operation. However, if the change in the encoding rate is small, the decoding operation may not need to be reset. In view of this, in step S128, the reception data decoding unit 43 determines whether the change in the encoding rate is larger than a predetermined threshold value, and if the change in the encoding rate is larger than the predetermined threshold value, determines that the decoding operation needs to be reset. If the change in the encoding rate is not larger than the threshold value, it is determined that the decoding operation does not need to be reset.

If it is determined in step S128 that the decoding operation needs to be reset, the operation moves on to step S129, and the reception data decoding unit 43 resets the decoding operation. The operation then moves on to step S130.

If it is determined in step S128 that there is no need to reset the decoding operation, the operation skips step S129, and moves on to step S130.

In step S130, the line-based multiple data link managing unit 191 obtains decoding information, and determines whether the gap ratios in the L image data and the R image data contained in the decoding information are both equal to or lower than a threshold value.

If both of the gap ratios in the L image data and the R image data are determined not to be equal to or lower than the threshold value in step S130, the operation returns to step S123. The procedures in steps S123 through S130 are then repeated until both of the gap ratios in the L image data and the R image data become equal to or lower than the threshold value, and change request commands with a changed encoding rate different from the previous one are generated.

Even if both of the gap ratios in the L image data and the R image data are determined not to be equal to or lower than the threshold value in step S130, information indicating degraded communication, instead of change request commands, is transmitted to the imaging devices 121 when the change request commands are generated in such a manner that the changed encoding rate has the lowest value. The operation then comes to an end.

If both of the gap ratios in the L image data and the R image data are determined to be equal to or lower than the threshold value in step S130, or if both of the gap ratios in the L image data and the R image data are determined not to be higher than the predetermined threshold value in step S122, the operation comes to an end.

As described above, when at least one of the gap ratios in L image data and R image data is higher than the threshold value, the relay device 122 transmits a change request command to the imaging device 121A or the imaging device 121B, whichever corresponds to the one of the gap ratios. As a result of this, at least one of the encoding rates of the L image data and the R image data is changed. Accordingly, even if at least one of the transmission environments of the L image data and the R image data is degraded, stereoscopic image data can be stably reproduced.

The interpolation data reading operation of Fig. 21 is equivalent to the interpolation data reading operation of Fig. 12, or is the interpolation data reading operation to be performed where the interpolation data storing operation of Fig. 11 is performed. However, the interpolation data reading operation to be performed where the interpolation data storing operation of Fig. 14 is performed is also the same as the interpolation data reading operation of Fig. 21, except that the procedures of steps S74 and S75 of Fig. 15 are carried out between step S123 and step S124.

A management table updating operation and a switching operation to be performed by the relay device 122 are the same as the management table updating operation of Fig. 10 and the switching operation of Fig. 13, respectively, and therefore, explanation of them is not repeated herein.

Further, in the second embodiment, the encoded rate is changed. However, instead of the encoding rate, the structural level in the line-based codec, or other information about encoding such as frequency components, may be changed. Also, the encoding rate and the structural level may be both changed. Further, instead of the encoding rate, information about communication such as a communication rate may be changed. In that case, the transmission data generating units 15 of the imaging devices 121 serve to change the communication rate.

Also, the encoding rate may be changed to a lower rate, or may be changed to a higher rate.

### <Third Embodiment>

### [Example Structure of a First Embodiment of a Communication System]

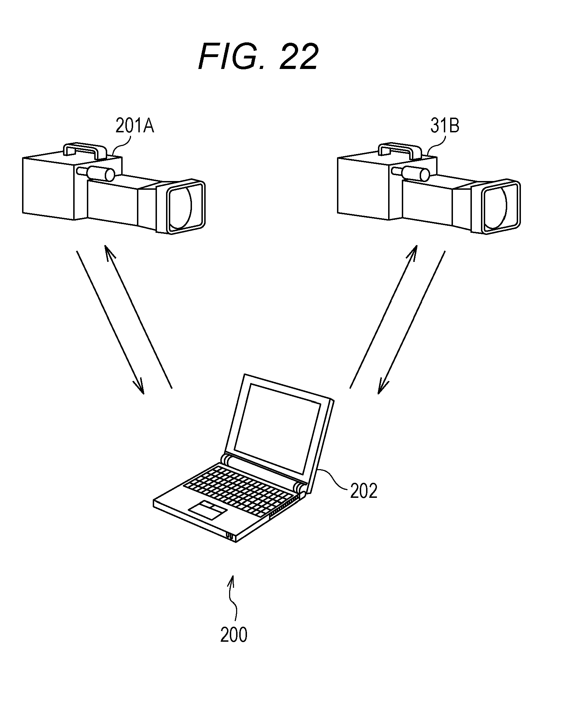

Fig. 22 is a block diagram showing an example structure of a third embodiment of a communication system to which the present technology is applied.

In the structure illustrated in Fig. 22, the same component as that in Fig. 2 is denoted by the same reference numeral as that in Fig. 2. The explanations that have already been made will not be repeated.

The structure of the communication system 200 of Fig. 22 differs from the structure of Fig. 2 mainly in that the imaging device 31A is replaced with an imaging device 201A, and the relay device 32 is replaced with a relay device 202.

In the communication system 200, not only L image data but also the audio data obtained together with the L image data is wirelessly transmitted to the relay device 202.

Specifically, like the imaging device 31A of Fig. 2, the imaging device 201A of the communication system 200 is formed with a video camera, for example. The imaging device 201A images an object and captures the sound in the surroundings. Like the imaging device 31A, the imaging device 201A compresses the resultant image data by a line-based codec. The imaging device 201A also converts the obtained audio analog signal into PCM (Pulse Code Modulation) data, and compresses the data by a technique such as MP3 (Moving Picture Experts Group Audio Layer-3), WMA (Windows Media Audio), RealAudio, or ATRAC (Adaptive Transform Acoustic Coding).

The imaging device 201A then wirelessly transmits the compressed image data as L image data to the relay device 202, and also wirelessly transmits the audio data. Like the imaging device 31A, the imaging device 201A also wirelessly receives image data and the like transmitted from the relay device 202.

Like the relay device 32 of Fig. 2, the relay device 202 is formed with a PC, for example. The relay device 202 wirelessly receives the L image data and audio data transmitted from the imaging device 201A, and R image data transmitted from the imaging device 31B. Like the relay device 32, the relay device 202 decodes the received L image data and R image data by a technique compatible with the line-based codec, and based on the L image data and R image data obtained as a result of the decoding, displays a stereoscopic image. The relay device 202 also decodes the received audio data by a technique compatible with MP3, WMA, RealAudio, ATRAC, or the like, and based on the PCM data obtained as a result of the decoding, outputs sound. Like the relay device 32, the relay device 202 also transmits predetermined image data to the imaging device 201A and the imaging device 31B.

### [Example Structure of the Relay Device]

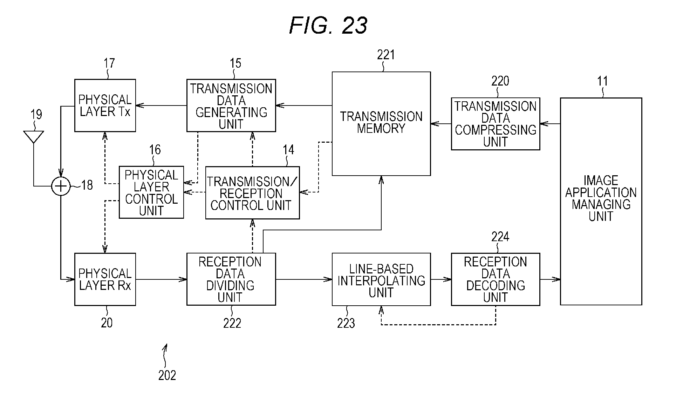

Fig. 23 is a block diagram showing an example structure of the relay device 202 shown in Fig. 22.

In the structure illustrated in Fig. 23, the same components as those in Fig. 3 are denoted by the same reference numerals as those in Fig. 3. The explanations that have already been made will not be repeated.

The structure of the relay device 202 of Fig. 23 differs from the structure of Fig. 3 mainly in that the transmission data compressing unit 40, the transmission memory 13, the reception data dividing unit 41, the line-based interpolating unit 42, and the reception data decoding unit 43 are replaced with a transmission data compressing unit 220, a transmission memory 221, a reception data dividing unit 222, a line-based interpolating unit 223, and a reception data decoding unit 224.

In the relay device 202, like the transmission data compressing unit 40 of Fig. 3, the transmission data compressing unit 220 compresses image data supplied from an image application managing unit 11 by a line-based codec at a predetermined encoding rate, to reduce the data amount of the image data. Like the transmission data compressing unit 40, the transmission data compressing unit 220 then outputs the compressed image data to the transmission memory 221. The transmission data compressing unit 220 also compresses audio data supplied from the image application managing unit 11 by a technique such as MP3, WMA, RealAudio, or ATRAC, to reduce the data amount. The transmission data compressing unit 220 then outputs the compressed audio data to the transmission memory 221.

The transmission memory 221 stores the image data and audio data input from the transmission data compressing unit 220. The image data and audio data are read by the transmission data generating unit 15, and are turned into packets. Like the transmission memory 13 of Fig. 3, the transmission memory 221 also stores transfer data that is supplied from the reception data dividing unit 222. Like the transmission memory 13, the transmission memory 221 may also store data not to be transferred to another terminal. The transmission memory 221 also notifies a transmission/reception control unit 14 of the data storage state.

The reception data dividing unit 222 analyzes a packet supplied from a physical layer Rx 20, and supplies the line-based interpolating unit 223 with reception data that includes the data containing the line-block-based image data required by the image application managing unit 11 and the data containing the audio data corresponding to the image data. The data containing the audio data contains at least the audio data and the line block number allotted to the image data corresponding to the image data.

Like the reception data dividing unit 21 of Fig. 1, the reception data dividing unit 222 also analyzes the packet supplied from the physical layer Rx 20, and in accordance with information such as a routing table, extracts transfer data that needs to be transmitted to another terminal. Like the reception data dividing unit 21, the reception data dividing unit 222 supplies the transfer data to the transmission memory 221. Like the reception data dividing unit 21, the reception data dividing unit 222 further extracts information required by the transmission/reception control unit 14 from the packet, and supplies the extracted information to the transmission/reception control unit 14.

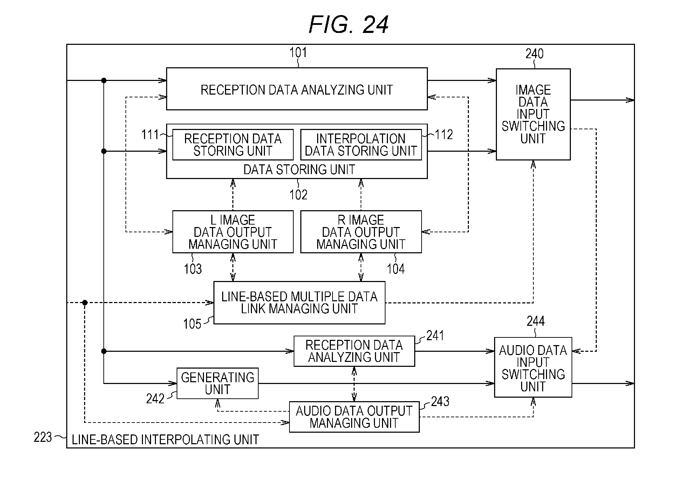

Like the line-based interpolating unit 42 of Fig. 3, the line-based interpolating unit 223 performs an interpolating operation on the reception data supplied from the reception data dividing unit 222. The line-based interpolating unit 223 then supplies the interpolated data obtained as a result of the interpolating operation performed on the reception data, to the reception data decoding unit 224. The line-based interpolating unit 223 will be described later in detail, with reference to Fig. 24.

The reception data decoding unit 224 decodes the image data of the interpolated data supplied from the line-based interpolating unit 223 by a technique compatible with the line-based codec, and supplies the resultant image data to the image application managing unit 11. The reception data decoding unit 224 also decodes the audio data of the interpolated data supplied from the line-based interpolating unit 223 by a technique compatible with MP3, WMA, RealAudio, or ATRAC, and supplies the resultant PCM data to the image application managing unit 11.

Like the reception data decoding unit 43, the reception data decoding unit 224 further determines the gap ratio in the interpolated data. Like the reception data decoding unit 43, the reception data decoding unit 224 supplies the line-based interpolating unit 223 with decoding information that contains the gap ratio and the line block number allotted to the line block being currently decoded.

The structure of the imaging device 201A is the same as the structure of the relay device 202, except that the line-based interpolating unit 223 is not included or the line-based interpolating unit 223 is replaced with the line-based interpolating unit disclosed in Patent Document 1. Therefore, explanation thereof is skipped herein.

### [Example Structure of the Line-Based Interpolating Unit]

Fig. 24 is a block diagram showing an example structure of the line-based interpolating unit 223 shown in Fig. 23.

In the structure illustrated in Fig. 24, the same components as those in Fig. 8 are denoted by the same reference numerals as those in Fig. 8. The explanations that have already been made will not be repeated.

The structure of the line-based interpolating unit 223 of Fig. 24 differs from the structure of Fig. 8 mainly in that the image data input switching unit 106 is replaced with an image data input switching unit 240, and a reception data analyzing unit 241, a generating unit 242, an audio data output managing unit 243, and an audio data input switching unit 244 are newly added.

In the line-based interpolating unit 223, in accordance with an instruction from the line-based multiple data link managing unit 105, the image data input switching unit 240 selects either the data containing image data of reception data supplied from a reception data analyzing unit 101 or interpolation data supplied from a data storing unit 102, like the image data input switching unit 106 of Fig. 8. The image data input switching unit 240 then outputs the selected data as interpolated data to the reception data decoding unit 224 of Fig. 23, like the image data input switching unit 106. The image data input switching unit 240 also supplies the audio data input switching unit 244 with the data containing the image data of the reception data and select information that is information indicating data selected from the interpolation data.

The reception data analyzing unit 241 stores the data containing audio data of reception data supplied from the reception data dividing unit 222 of Fig. 23. The reception data analyzing unit 241 also analyzes the data containing the audio data, to recognize the line block number contained in the data. The reception data analyzing unit 241 then supplies the audio data input switching unit 244 with the data containing the audio data with the line block number designated by the audio data output managing unit 243.

The reception data analyzing unit 241 also analyzes the data containing the audio data, to detect the packet error ratio in the data as the audio data error ratio. The reception data analyzing unit 241 then supplies the audio data error ratio to the audio data output managing unit 243.

The generating unit 242 generates mute data that is the data for muting sound. Specifically, the generating unit 242 generates audio data with a frequency component of 0 as the mute data. Based on the data containing the audio data of the reception data supplied from the reception data dividing unit 222, the generating unit 242 searches for an interpolation location where the audio data does not become highfrequency audio data when interpolated with the mute data. The generating unit 242 replaces the audio data having the line block number designated by the audio data output managing unit 243 with the mute data in the interpolation location, and supplies data containing the resultant audio data as interpolation data to the audio data input switching unit 244.

The audio data output managing unit 243 notifies the generating unit 242 and the reception data analyzing unit 241 of the line block number that is allotted to the line block being currently decoded and is contained in the decoding information supplied from the reception data decoding unit 224 of Fig. 23. Based on the audio data error ratio supplied from the reception data analyzing unit 241, the audio data output managing unit 243 instructs the audio data input switching unit 244 to perform selection.

Based on the select information supplied from the image data input switching unit 240 and the instruction from the audio data output managing unit 243, the audio data input switching unit 244 selects either the data containing audio data of the reception data supplied from the reception data analyzing unit 241 or the interpolation data supplied from the generating unit 242. The audio data input switching unit 244 (an audio output unit) then outputs the selected data containing the audio data or the selected interpolation data, as interpolated data, to the reception data decoding unit 224 of Fig. 23.

### [Description of Operations of the Relay Device]

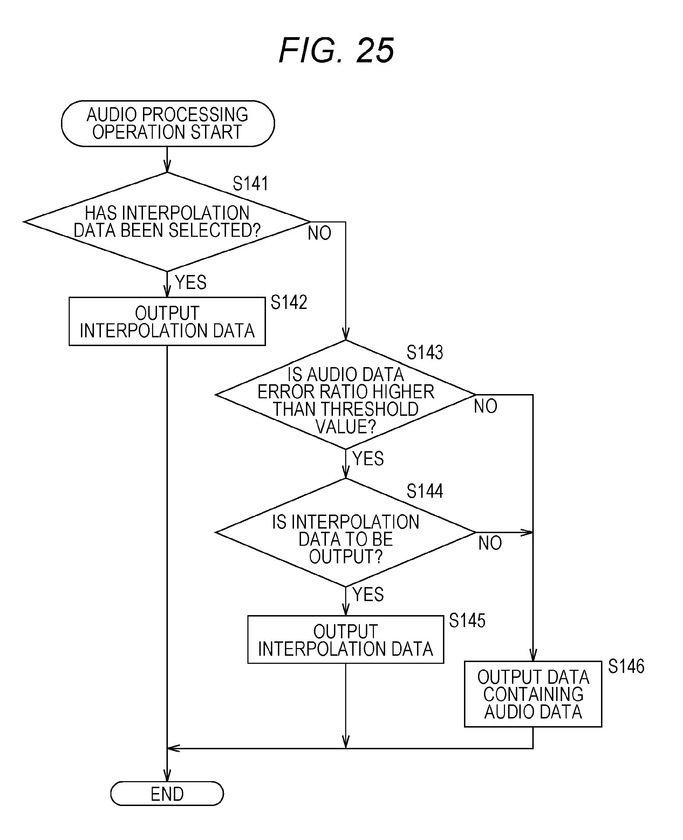

Fig. 25 is a flowchart for explaining an audio processing operation to be performed by the line-based interpolating unit 223 shown in Fig. 24. This audio processing operation is performed when select information is input from the image data input switching unit 240 of Fig. 24, for example.

In step S141 of Fig. 25, based on the select information supplied from the image data input switching unit 240, the audio data input switching unit 244 determines whether interpolation data has been selected by the image data input switching unit 240.

If it is determined in step S141 that interpolation data has been selected, the operation moves on to step S142. In step S142, the audio data input switching unit 244 selects interpolation data from reception data supplied from the reception data analyzing unit 241 and the interpolation data supplied from the generating unit 242, and outputs the selected interpolation data as interpolated data. Accordingly, when images corresponding to the interpolation data stored in the interpolation data storing unit 112 are displayed, outputting sound that is out of lip-sync can be prevented. As a result, agreeable sound in synchronization with images can be output.

If it is determined in step S141 that interpolation data has not been selected, or if the reception data has been selected by the image data input switching unit 240, on the other hand, the operation moves on to step S143.

In step S143, the audio data output managing unit 243 determines whether the audio data error ratio supplied from the reception data analyzing unit 241 is higher than a predetermined threshold value.

If the audio data error ratio is determined to be higher than the predetermined threshold value in step S143, the operation moves on to step S144, and the audio data output managing unit 243 determines whether the interpolation data output from the generating unit 242 is to be output.

Specifically, if a user, for example, has instructed that the interpolation data is to be output when the audio data error ratio is higher than the predetermined threshold value, the audio data output managing unit 243 determines that the interpolation data is to be output. If a user has instructed that the data containing the audio data of the reception data is to be directly output even when the audio data error ratio is higher than the predetermined threshold value, the audio data output managing unit 243 determines that the interpolation data is not to be output.

If it is determined in step S144 that the interpolation data is to be output, the audio data output managing unit 243 instructs the audio data input switching unit 244 to select the interpolation data. In step S145, the audio data input switching unit 244 selects and outputs the interpolation data supplied from the generating unit 242, and ends the operation.

If the audio data error ratio is determined not to be higher than the threshold value in step S143, or if it is determined in step S144 that the interpolation data is not to be output, on the other hand, the audio data output managing unit 243 instructs the audio data input switching unit 244 to select the data containing the audio data of the reception data. In step S146, the audio data input switching unit 244 selects and outputs the data containing the audio data of the reception data supplied from the reception data analyzing unit 241, and ends the operation.

Although the line-based interpolating unit 223 is formed by adding the audio processing block to the line-based interpolating unit 42 of Fig. 8 in the above description, but can also be formed by adding the audio processing block to the line-based interpolating unit 172 of Fig. 20.

### <Fourth Embodiment>

### [Example Structure of the Line-Based Interpolating Unit]

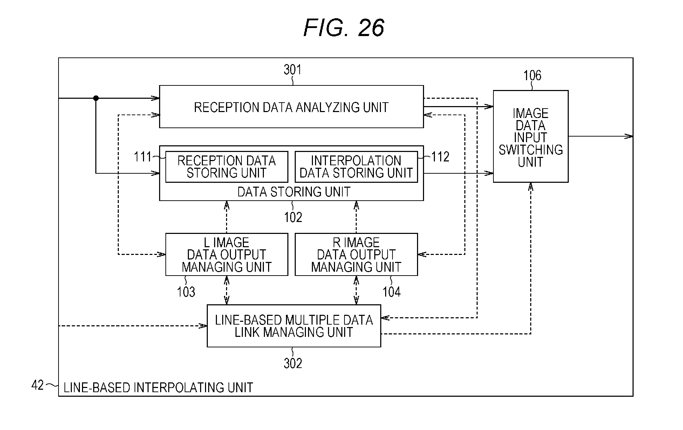

Fig. 26 is a block diagram showing another example structure of the line-based interpolating unit 42 shown in Fig. 3.

In the structure illustrated in Fig. 26, the same components as those in Fig. 8 are denoted by the same reference numerals as those in Fig. 8. The explanations that have already been made will not be repeated.

The structure of the line-based interpolating unit 42 of Fig. 26 differs from the structure of Fig. 8 in that the reception data analyzing unit 101 is replaced with a reception data analyzing unit 301, and the line-based multiple data link managing unit 105 is replaced with a line-based multiple data link managing unit 302.

The line-based interpolating unit 42 of Fig. 26 outputs interpolation data while obtaining the parameter information about the first field (picture) after a scene change. The parameter information is quantization information and information to be used for inter-frame predictions.

Specifically, in the line-based interpolating unit 42 of Fig. 26, the reception data analyzing unit 301 stores reception data supplied from the reception data dividing unit 41 of Fig. 3, like the reception data analyzing unit 101 of Fig. 8.

Also, like the reception data analyzing unit 101, the reception data analyzing unit 301 analyzes the reception data, to recognize the line block number contained in the reception data. Like the reception data analyzing unit 101, the reception data analyzing unit 301 further analyzes the reception data, and based on the channel number contained in the reception data, determines whether the image data contained in the reception data is L image data or R image data. Like the reception data analyzing unit 101, the reception data analyzing unit 301 analyzes the reception data, to detect the number of packet errors in the reception data and the arrival time of the reception data.

Like the reception data analyzing unit 101, in a case where the image data contained in the reception data is L image data, the reception data analyzing unit 301 supplies an L image data output managing unit 103 with L image data information that contains the line block number, the number of packet errors, and the arrival time of the reception data. In a case where the image data contained in the reception data is R image data, on the other hand, the reception data analyzing unit 301 supplies an R image data output managing unit 104 with the line block number, the number of packet errors, and the arrival time of the reception data, like the reception data analyzing unit 101.

Further, like the reception data analyzing unit 101, the reception data analyzing unit 301 reads the reception data containing the L image data having the line block number designated by the L image data output managing unit 103, and also reads the reception data containing the R image data having the line block number designated by the R image data output managing unit 104.

Also, like the reception data analyzing unit 101, in a case where an error has occurred at least in one of the line blocks of the L image data and the R image data contained in the read image data, the reception data analyzing unit 301 inserts forcibly decoded data into a portion of the L image data or the R image data, the portion corresponding to the error portion. Like the reception data analyzing unit 101, the reception data analyzing unit 301 then supplies the image data input switching unit 106 with the reception data having the forcibly decoded data inserted thereto.

Further, the reception data analyzing unit 301 (a detecting unit) analyzes the reception data, to detect a scene change. A scene change can be detected based on the difference between sets of L image data or sets of R image data contained in the reception data, or can be detected based on the information indicating the scene change field location transmitted from an imaging device 31. The reception data analyzing unit 301 supplies the scene change detection result to the line-based multiple data link managing unit 302.

Like the line-based multiple data link managing unit 105 of Fig. 8, the line-based multiple data link managing unit 302 stores and manages a management table. Like the line-based multiple data link managing unit 105, the line-based multiple data link managing unit 302 registers, in the management table, the L image information supplied from the L image data output managing unit 103 and the R image information supplied from the R image data output managing unit 104. Like the line-based multiple data link managing unit 105, the line-based multiple data link managing unit 302 also instructs an image data input switching unit 106 to perform selection, based on the management table.

Like the line-based multiple data link managing unit 105, the line-based multiple data link managing unit 302 also instructs the L image data output managing unit 103 and the R image data output managing unit 104 to perform reading, based on the decoding information supplied from the reception data decoding unit 43 of Fig. 3. Like the line-based multiple data link managing unit 105, the line-based multiple data link managing unit 302 further instructs the L image data output managing unit 103 and the R image data output managing unit 104 to perform storing, based on the management table, for example.

Based on the scene change detection result supplied from the reception data analyzing unit 301, the line-based multiple data link managing unit 302 also instructs the image data input switching unit 106 to perform selection.

### [Description of Operations of the Relay Device]

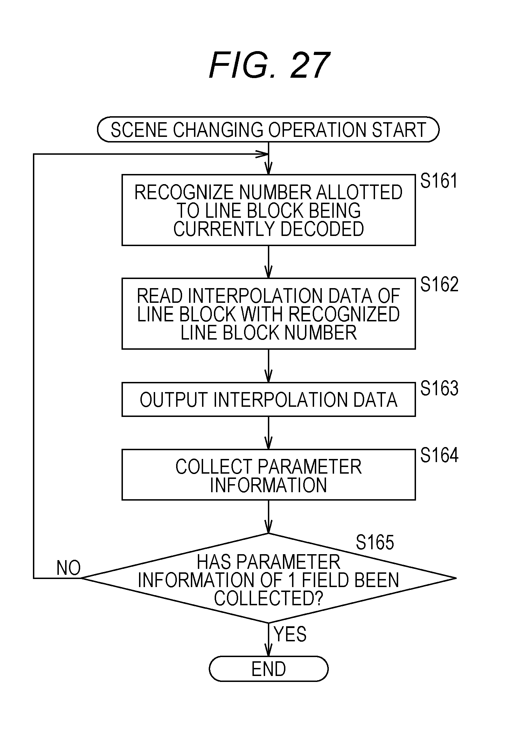

Fig. 27 is a flowchart for explaining a scene changing operation to be performed by the line-based interpolating unit 42 shown in Fig. 26. This scene changing operation is started when a scene change detection result indicating the existence of a new change is supplied from the reception data analyzing unit 301 to the line-based multiple data link managing unit 302, for example. It should be noted that the interpolation data storing operation shown in Fig. 11 is performed in the line-based interpolating unit 42.

In step S161, the line-based multiple data link managing unit 302 recognizes the line block number that is contained in the decoding information supplied from the reception data decoding unit 43 of Fig. 3 and is allotted to the line block being currently decoded. The line-based multiple data link managing unit 302 then notifies the interpolation data storing unit 112 of the line block number via the L image data output managing unit 103 and the R image data output managing unit 104. The line-based multiple data link managing unit 302 also instructs the image data input switching unit 106 to select the interpolation data output from the interpolation data storing unit 112.

In step S162, the interpolation data storing unit 112 reads the interpolation data of the line blocks with the line block numbers designated by the L image data output managing unit 103 and the R image data output managing unit 104, and supplies the interpolation data to the image data input switching unit 106.

In step S163, in accordance with the instruction from the line-based multiple data link managing unit 302, the image data input switching unit 106 selects the interpolation data read from the interpolation data storing unit 112, and outputs the interpolation data as interpolated data.

In step S164, the reception data analyzing unit 301 analyzes the reception data of the first field after the scene change, and collects the parameter information contained in the reception data.

In step S165, the reception data analyzing unit 301 determines whether the parameter information of one field has been collected, or whether all the parameter information about the first field after the scene change has been collected.

If it is determined in step S165 that the parameter information of one field has not yet been collected, the operation returns to step S161, and the procedures in steps S161 through S165 are repeated until the parameter information of one field is collected. That is, while the parameter information about the first field after the scene change is being collected, interpolation data is output.

If it is determined in step S165 that the parameter information of one field has been collected, the operation comes to an end.

It should be noted that the interpolation data reading operation shown in Fig. 12 and the switching operation shown in Fig. 13 are performed on the reception data about the second and later fields after the scene change. In a case where the interpolation data storing operation shown in Fig. 14 is performed in the relay device 32, the interpolation data reading operation shown in Fig. 15 and the switching operation shown in Fig. 13 are performed on the reception data about the second and later fields after the scene change. The scene changing operation to be performed in this case is the same as the scene changing operation of Fig. 27, except that the procedures in steps S74 and S75 of Fig. 15 are carried out between the procedures of steps S162 and S163.

As described above, the line-based interpolating unit 42 of Fig. 26 outputs interpolation data while obtaining the parameter information about the reception data of the first field after a scene change. That is, the line-based interpolating unit 42 outputs interpolation data, instead of the reception data containing the image data of the first field after a scene change that has caused a great change in image data, lowered the compression efficiency, and degraded the image quality. As a result, the image quality of output image data is increased.

Further, in the fourth embodiment, interpolation data is output while the parameter information about the first field after a scene change is being collected in the line-based interpolating unit 42 of Fig. 8. However, in the line-based interpolating unit 172 of Fig. 20 or the line-based interpolating unit 223 of Fig. 24, interpolation data can also be output while the parameter information about the first field after a scene change is being collected.

Also, in the fourth embodiment, the scene changing operation is performed at the time of a scene change. However, the scene changing operation may be performed when stereoscopic image data greatly varies in terms of time, such as at the time of channel switching.

### <Fifth Embodiment>

### [Example Structure of the Line-Based Interpolating Unit]

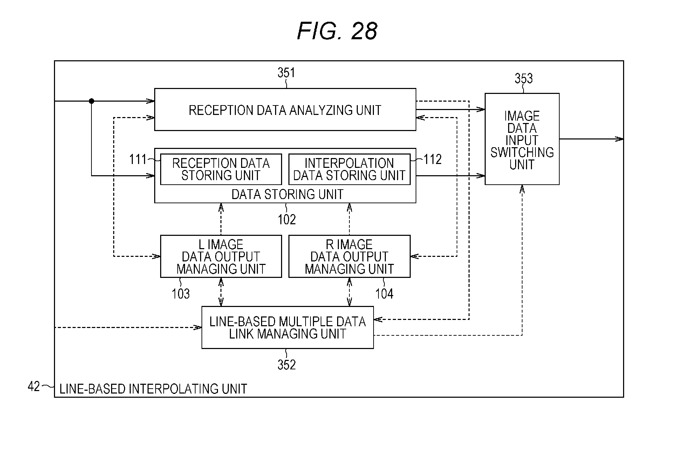

Fig. 28 is a block diagram showing yet another example structure of the line-based interpolating unit 42 shown in Fig. 3.

In the structure illustrated in Fig. 28, the same components as those in Fig. 8 are denoted by the same reference numerals as those in Fig. 8. The explanations that have already been made will not be repeated.

The structure of the line-based interpolating unit 42 of Fig. 28 differs from the structure of Fig. 8 in that the reception data analyzing unit 101, the line-based multiple data link managing unit 105, and the image data input switching unit 106 are replaced with a reception data analyzing unit 351, a line-based multiple data link managing unit 352, and an image data input switching unit 353.

In a case where a parallax is smaller than a predetermined threshold value, and the number of packet errors and the arrival time of one of the line blocks of L image data and R image data are smaller than predetermined threshold values, the line-based interpolating unit 42 of Fig. 28 generates the other one from the one, and outputs the generated data, instead of interpolation data.

Specifically, in the line-based interpolating unit 42 of Fig. 28, the reception data analyzing unit 351 stores reception data supplied from the reception data dividing unit 41 of Fig. 3, like the reception data analyzing unit 101 of Fig. 8. Also, like the reception data analyzing unit 101, the reception data analyzing unit 351 analyzes the reception data, to recognize the line block number contained in the reception data. Like the reception data analyzing unit 101, the reception data analyzing unit 351 further analyzes the reception data, and based on the channel number contained in the reception data, determines whether the image data contained in the reception data is L image data or R image data. Like the reception data analyzing unit 101, the reception data analyzing unit 351 analyzes the reception data, to detect the number of packet errors in the reception data and the arrival time of the reception data.

Like the reception data analyzing unit 101, in a case where the image data contained in the reception data is L image data, the reception data analyzing unit 351 supplies an L image data output managing unit 103 with L image data information that contains the line block number, the number of packet errors, and the arrival time of the reception data. In a case where the image data contained in the reception data is R image data, on the other hand, the reception data analyzing unit 351 supplies an R image data output managing unit 104 with the line block number, the number of packet errors, and the arrival time of the reception data, like the reception data analyzing unit 101.

Further, like the reception data analyzing unit 101, the reception data analyzing unit 351 reads the reception data containing the L image data having the line block number designated by the L image data output managing unit 103, and also reads the reception data containing the R image data having the line block number designated by the R image data output managing unit 104.

Also, like the reception data analyzing unit 101, in a case where an error has occurred at least in one of the line blocks of the L image data and the R image data contained in the read image data, the reception data analyzing unit 351 inserts forcibly decoded data into a portion of the L image data or the R image data, the portion corresponding to the error portion. The reception data analyzing unit 101 then supplies the image data input switching unit 353 with the reception data having the forcibly decoded data inserted thereto.

The reception data analyzing unit 351 (a parallax detecting unit) also analyzes the line blocks of the L image data and the R image data as the reception data, to detect the parallaxes of the line blocks. The parallaxes may be contained in the reception data, or may be calculated from the shift length between the line blocks of the L image data and the R image data. The reception data analyzing unit 351 determines whether the detected line block parallaxes are equal to or larger than a predetermined value, and generates parallax flags that are flags indicating the determination results. The reception data analyzing unit 351 supplies the parallax flags of the respective line blocks, together with the line block numbers of the line blocks, to the line-based multiple data link managing unit 352.

Like the line-based multiple data link managing unit 105 of Fig. 8, the line-based multiple data link managing unit 352 stores and manages a management table. Like the line-based multiple data link managing unit 105, the line-based multiple data link managing unit 352 registers, in the management table, the L image information supplied from the L image data output managing unit 103 and the R image information supplied from the R image data output managing unit 104. The line-based multiple data link managing unit 352 also associates the line block parallax flags supplied from the reception data analyzing unit 351 with the line block numbers supplied at the same time as the parallax flags, and registers the parallax flags in the management table.

Like the line-based multiple data link managing unit 105, the line-based multiple data link managing unit 352 also instructs the image data input switching unit 353 to perform selection on a line block basis, in accordance with the management table. Like the line-based multiple data link managing unit 105, the line-based multiple data link managing unit 352 also instructs the L image data output managing unit 103 and the R image data output managing unit 104 to perform reading, based on the decoding information supplied from the reception data decoding unit 43. Like the line-based multiple data link managing unit 105, the line-based multiple data link managing unit 352 further instructs the L image data output managing unit 103 and the R image data output managing unit 104 to perform storing, based on the management table, for example.

In accordance with an instruction from the line-based multiple data link managing unit 352, the image data input switching unit 353 generates one of L image data and R image data from the other one of the L image data and the R image data that are interpolation data read from the interpolation data storing unit 112, and sets the resultant L image data and R image data as partial interpolation data. In accordance with an instruction from the line-based multiple data link managing unit 352, the image data input switching unit 353 selects the reception data from the reception data analyzing unit 351, the interpolation data from the data storing unit 102, or the partial interpolation data, and outputs the selected data to the reception data decoding unit 43 of Fig. 3.

### [Example of the Management Table]

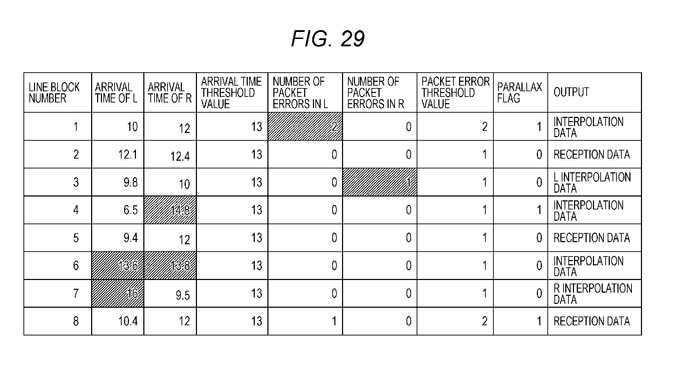

Fig. 29 is a diagram showing an example of a management table.

The management table of Fig. 29 is formed by adding the item "parallax flag" to the management table of Fig. 9. As the information corresponding to the item "parallax flag", the parallax flags generated by the reception data analyzing unit 351 are registered. Here, a parallax flag "1" indicates that the parallax is equal to or larger than a predetermined threshold value, and a parallax flag "0" indicates that the parallax is smaller than the predetermined threshold value.

In the example shown in Fig. 29, "1", "0", "0", "1", "0", "0", "0", and "1" are registered as the parallax flags associated with line block numbers "1" through "8", respectively.

Accordingly, the information in the item "output" associated with the line block number "3" is "interpolation data" in the example shown in Fig. 9, but is "L interpolation data" in the example shown in Fig. 29. Here, "L interpolation data" is partial interpolation data formed with L image data as reception data and R image data generated from the L image data.

More specifically, in the line block with the line block number "3", the number of packet errors of the R image data is equal to or larger than the threshold value, but the value of the arrival time and the number of packet errors of the L image data are both smaller than the respective threshold values. Therefore, the image data input switching unit 353 of Fig. 28 generates R image data by shifting the L image data in the horizontal direction, and outputs partial interpolation data formed with the L image data and the generated R image data.

Also, the information in the item "output" associated with the line block number "7" is "interpolation data" in the example shown in Fig. 9, but is "R interpolation data" in the example shown in Fig. 29. Here, "R interpolation data" is partial interpolation data formed with R image data as reception data and L image data generated from the R image data.

More specifically, in the line block with the line block number "7", the value of the arrival time of the L image data is equal to or larger than the threshold value, but the value of the arrival time and the number of packet errors of the R image data are both smaller than the respective threshold values. Therefore, the image data input switching unit 353 generates L image data by shifting the R image data in the horizontal direction, and outputs partial interpolation data formed with the R image data and the generated L image data.

### [Example Structure of the Line-Based Interpolating Unit]

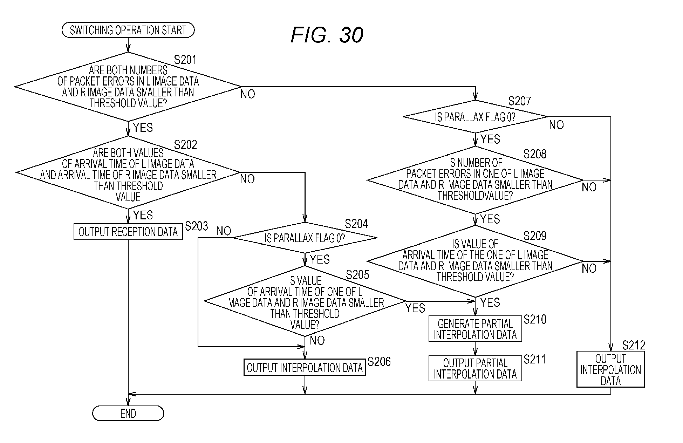

Fig. 30 is a flowchart for explaining a switching operation to be performed by the line-based interpolating unit 42 of Fig. 28.

In step S201, the line-based multiple data link managing unit 352 refers to the management table, to determine whether the number of packet errors in the L image data and the number of packet errors in the R image data in the current line block are both smaller than a threshold value, as in the procedure in step S41 of Fig. 13.

If both of the numbers of packet errors in the L image data and the R image data are determined to be smaller than the threshold value in step S201, the operation moves on to step S202.

In step S202, the line-based multiple data link managing unit 352 refers to the management table, to determine whether the value of the arrival time of the L image data and the value of the arrival time of the R image data in the current line block are both smaller than a threshold value, as in the procedure in step S42 of Fig. 13.

If both of the values of the arrival time of the L image data and the arrival time of the R image data are determined to be smaller than the threshold value in step S202, the line-based multiple data link managing unit 352 instructs the image data input switching unit 353 to select the reception data. In step S203, the image data input switching unit 353 outputs interpolated data that is the reception data received from the reception data analyzing unit 351, and the operation comes to an end.

If both of the values of the arrival time of the L image data and the arrival time of the R image data are determined not to be smaller than the threshold value in step S202, the operation moves on to step S204. In step S204, the line-based multiple data link managing unit 352 refers to the management table, to determine whether the parallax flag of the current line block is 0.

If the parallax flag is determined to be 0 in step S204, the operation moves on to step S205, and the line-based multiple data link managing unit 352 refers to the management table, to determine whether one of the values of the arrival time of the L image data and the arrival time of the R image data in the current line block is smaller than the threshold value.

If neither of the values of the arrival time of the L image data and the arrival time of the R image data is determined to be smaller than the threshold value in step S205, or if both of the values of the arrival time of the L image data and the arrival time of the R image data are equal to or larger than the threshold value, the line-based multiple data link managing unit 352 instructs the image data input switching unit 353 to select the interpolation data. The operation then moves on to step S206.

If the parallax flag is determined not to be 0 in step S204, or if the parallax flag is 1, the line-based multiple data link managing unit 352 instructs the image data input switching unit 353 to select the interpolation data. The operation then moves on to step S206.

In step S206, the image data input switching unit 353 outputs interpolated data that is the interpolation data received from the interpolation data storing unit 112, and the operation comes to an end.

If the value of the arrival time of one of the L image data and the R image data is determined to be smaller than the threshold value in step S205, the line-based multiple data link managing unit 352 instructs the image data input switching unit 353 to select the partial interpolation data obtained by generating the other one of the L image data and the R image data from the one. The operation then moves on to step S208.

If both of the numbers of packet errors in the L image data and the R image data are determined not to be smaller than the threshold value in step S201, the operation moves on to step S207, and the line-based multiple data link managing unit 352 refers to the management table, to determine whether the parallax flag is 0.

If the parallax flag is determined to be 0 in step S207, the operation moves on to step S208, and the line-based multiple data link managing unit 352 refers to the management table, to determine whether the number of packet errors in one of the L image data and the R image data in the current line block is smaller than the threshold value.

If the number of packet errors in one of the L image data and the R image data is determined to be smaller than the threshold value in step S208, the operation moves on to step S209. In step S209, the line-based multiple data link managing unit 352 refers to the management table, to determine whether the value of the arrival time of the one of the L image data and the R image data is smaller than the threshold value.

If the value of the arrival time is determined to be smaller than the threshold value in step S208, the line-based multiple data link managing unit 352 instructs the image data input switching unit 353 to select the partial interpolation data obtained by generating the other one of the L image data and the R image data from the one. The operation then moves on to step S210.

In step S210, in accordance with the instruction from the line-based multiple data link managing unit 352, the image data input switching unit 353 generates the partial interpolation data.

In step S211, the image data input switching unit 353 selects the partial interpolation data generated in step S210, and outputs the selected data as the interpolated data. The operation then comes to an end.

If the parallax flag is determined not to be 0 in step S207, or if neither of the number of packet errors in the L image data and the R image data is determined to be smaller than the threshold value in step S208, or if the value of the arrival time of the one is determined not to be smaller than the threshold value in step S209, the line-based multiple data link managing unit 352 instructs the image data input switching unit 353 to select the interpolation data. The operation then moves on to step S212.

In step S212, the image data input switching unit 353 selects the interpolation data received from the interpolation data storing unit 112, and outputs the selected interpolation data as the interpolated data. The operation then comes to an end.

In the fifth embodiment, partial interpolation data is generated and output from the line-based interpolating unit 42 of Fig. 8. However, partial interpolation data can also be generated and output from the line-based interpolating unit 172 of Fig. 20 or the line-based interpolating unit 223 of Fig. 24.

In a case where L image data and R image data have Y components and C components, checks may be made to determine only whether the number of errors and the value of the arrival time of the Y component of each of the L image data and the R image data are smaller than threshold values. This is because missing of C components might not be conspicuous in display.

Further, in the above descriptions, determining whether to read interpolation data is based on gap ratios. However, determining whether to read interpolation data may be based on a result of a parity check made by the reception data dividing unit 41 (152, 222).

Also, in the above descriptions, the imaging devices 31 (121, 201A) and the relay device 32 (122, 02) perform wireless communications. However, cable communications using telephone lines (including ADSL), power lines, co-ax cables, optical fibers, or the like may be performed.

Further, the reception data storing unit 111 and the interpolation data storing unit 112 store image data of one field, but may also store image data of more than one field. In this case, interpolations can be performed by using interpolation data of more than one field, and accordingly, more stable stereoscopic images can be reproduced.

The image application managing unit 11 can also cause a buffer (not shown) in a display device such as a television receiver or LCD (Liquid Crystal Display) to store reception data supplied from the reception data decoding unit 43 (153, 224). Generally, image data of several fields or several frames can be stored in such a buffer.

Further, in the above descriptions, the data being decoded is switched between reception data and interpolation data by the line block. However, the data being decoded may be switched by the frame.

Also, in the above descriptions, the data storing unit 102 includes the two storing units of the reception data storing unit 111 for storing and the interpolation data storing unit 112 for reading, to enable easy memory control operations. However, the structure of the data storing unit 102 is not limited to that.

Further, in the above descriptions, each stereoscopic image is formed with images of two viewpoints, and therefore, the number of channels is 2. In a case where each stereoscopic image is formed with images of two or more viewpoints, however, the number of channels may be 2 or larger.

Also, in the above descriptions, in a case where the number of packet errors and the value of the arrival time of a line block are smaller than threshold values, the line block is used as interpolation data, or is made the object to be decoded. In a case where one of the number of packet errors and the value of the arrival time is smaller than the threshold value, however, the line block may also be used as interpolation data, or may also be made the object to be decoded.

Further, in the above descriptions, information is registered in the management table on a line block basis. However, information may be registered for each set of line blocks. In this case, determinations based on threshold values are made for each set of line blocks.

Also, the definition of one field may not be consistent with HSYNC (Horizontal Synchronizing signal).

### <Sixth Embodiment>

### [Description of a Computer to Which the Present Technology is Applied]

At least part of the above described series of operations can be performed by hardware or software. In a case where at least part of the series of operations is performed by software, the program forming the software is installed into a general-purpose computer or the like.

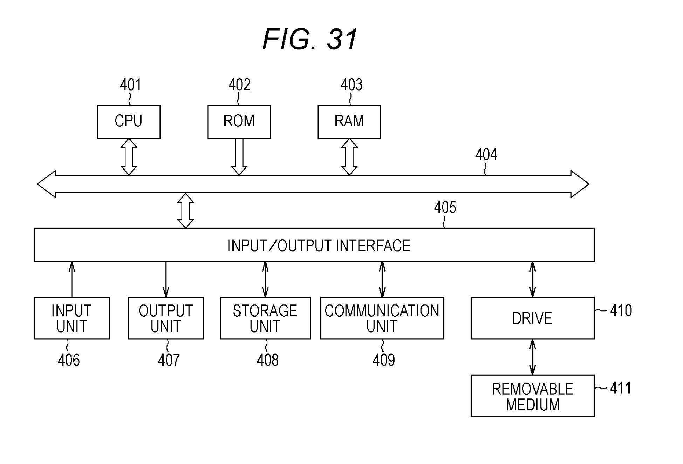

In view of this, Fig. 31 shows an example structure of an embodiment of a computer into which the program for performing the above described series of operations is installed.

The program can be recorded beforehand in a storage unit 408 or a ROM (Read Only Memory) 402 provided as a recording medium in the computer.

Alternatively, the program can be stored (recorded) in a removable medium 411. This removable medium 411 can be provided as so-called packaged software. Here, the removable medium 411 may be a flexible disk, a CD ROM (Compact Disc Read Only Memory), an MO (MagnetoOptical) disk, a DVD (Digital Versatile Disc), a magnetic disk, or a semiconductor memory, for example.

The program can not only be installed into the computer from the above described removable medium 411 via the drive 410, but also be downloaded into the computer via a communication network or a broadcasting network and be installed into the internal storage unit 408. That is, the program can be wirelessly transferred from a download site, for example, to the computer via an artificial satellite for digital satellite broadcasting, or can be transferred by cable to the computer via a network such as a LAN (Local Area Network) or the Internet.

The computer includes a CPU (Central Processing Unit) 401, and an input/output interface 405 is connected to the CPU 401 via a bus 404.

When an instruction is input by a user operating an input unit 406 or the like via the input/output interface 405, the CPU 401 executes the program stored in the ROM 402 accordingly. Alternatively, the CPU 401 loads the program stored in the storage unit 408 into a RAM (Random Access Memory) 403, and executes the program.

By doing so, the CPU 401 performs the operations according to the above described flowcharts, or performs the operations with the structures illustrated in the above described block diagrams. Where necessary, the CPU 401 outputs the operation results from an output unit 407 or transmit the operation results from a communication unit 409, via the input/output interface 405, for example, and further stores the operation results into the storage unit 408.

The input unit 406 is formed with a keyboard, a mouse, a microphone, or the like. The output unit 407 is formed with a LCD (Liquid Crystal Display), a speaker, or the like.

In this specification, the operations performed by the computer in accordance with the program are not necessarily performed in chronological order compliant with the sequences shown in the flowcharts. That is, the operations to be performed by the computer in accordance with the program include operations to be performed in parallel or independently of one another (such as parallel operations or object-based operations).

The program may be executed by one computer (processor), or may be executed in a distributive manner by more than one computer. Further, the program may be transferred to a remote computer, and be executed therein.

In this specification, a system means an entire apparatus formed with more than one device.

It should be noted that embodiments of the present technology are not limited to the above described embodiments, and various modifications may be made to them without departing from the scope of the technique.

The present technology may be embodied in the following structures.

(1)
   An information processing apparatus including:
   a receiving unit that receives multi-view image data on a line block basis, the multi-view image data being encoded by a line-based codec and forming stereoscopic image data;
   a storing unit that stores interpolation data, the interpolation data being the multi-view image data received by the receiving unit; and
   an image output unit that outputs the predetermined amount of the interpolation data corresponding to the predetermined amount of the multi-view image data when the number of errors in image data of at least one viewpoint in the predetermined amount of the multi-view image data received by the receiving unit is equal to or larger than a first threshold value, the predetermined amount of the interpolation data being stored in the storing unit, the number of errors in the predetermined amount of the interpolation data being smaller than a second threshold value.
(2)
   The information processing apparatus of (1), further including
   a managing unit that manages a table in which the number of errors in a predetermined amount of image data of each of the viewpoints is registered,
   wherein, based on the table, the image output unit outputs the interpolation data.
(3)
   The information processing apparatus of (1) or (2), wherein, when all the numbers of errors in the predetermined amount of the multi-view image data received by the receiving unit are smaller than the first threshold value, the image output unit outputs the predetermined amount of the multi-view image data.
(4)
   The information processing apparatus of (1) or (2), wherein, when the number of errors in image data of at least one viewpoint in the predetermined amount of the multi-view image data is equal to or larger than the first threshold value, or when a value of arrival time of image data is equal to or larger than a third threshold value, the image output unit outputs the predetermined amount of the interpolation data corresponding to the predetermined amount of the multi-view image data, the predetermined amount of the interpolation data being stored in the storing unit, the predetermined amount of the interpolation data having a smaller number of errors than the second threshold value and having a smaller value of arrival time than a fourth threshold value.
(5)
   The information processing apparatus of (4), wherein, when all the numbers of errors in the predetermined amount of the multi-view image data are smaller than the first threshold value and all the values of arrival times of the image data are smaller than the third threshold value, the image output unit outputs the predetermined amount of the multi-view image data.
(6)
   The information processing apparatus of any one of (1) to (3), further including
   an inserting unit that inserts dummy data to a portion of the multi-view image data when there is an error in image data of at least one viewpoint in the multi-view image data received by the imaging unit, the portion corresponding to the portion having the error,
   wherein, when all the numbers of errors are smaller than the first threshold value, the image output unit outputs the predetermined amount of the multi-view image data having the dummy data inserted thereto by the inserting unit.
(7)
   The information processing apparatus of any one of (1) to (6), wherein the storing unit stores image data each having a smaller number of errors than the second threshold value out of the multi-view image data received by the receiving unit.
(8)
   The information processing apparatus of any one of (1) to (7), further including
   a requesting unit that requests a change of information about encoding or communication of image data, when the number of errors in the image data of at least one viewpoint in the predetermined amount of the multi-view image data received by the receiving unit is larger than the third threshold value.
(9)
   The information processing apparatus of any one of (1) to (8), further including:
   a generating unit that generates mute data for muting sound; and
   an audio output unit that outputs the mute data,
   wherein the receiving unit receives audio data corresponding to the stereoscopic image data, and
   when the predetermined amount of the multi-view image data is output from the image output unit, the audio output unit outputs the audio data corresponding to the image data, and when the predetermined amount of the interpolation data is output from the image output unit, the audio output unit outputs the mute data.
(10)
   The information processing apparatus of any one of (1) to (9), further including
   a detecting unit that detects a scene change or channel switching of the image data,
   wherein, while parameter information about the multi-view image data of the first picture after the scene change or channel switching is being collected, the image output unit outputs the interpolation data.
(11)
   The information processing apparatus of any one of (1) to (3) and (6) to (10), further including
   a parallax detecting unit that detects a parallax of the predetermined amount of the stereoscopic image data,
   wherein, based on the parallax, when the parallax is small, the number of errors in image data of at least one viewpoint in the predetermined amount of multi-view image data is equal to or larger than the first threshold value, and the number of errors in image data of at least one viewpoint is smaller than the first threshold value, the image output unit generates the predetermined amount of image data of another viewpoint by using the predetermined amount of the image data of the at least one viewpoint having the smaller number of errors than the first threshold value, and outputs the predetermined amount of the multi-view image data obtained as a result of the generation.
(12)
   An information processing method implemented by an information processing apparatus including a storing unit,
   the information processing method including:
   a reception control step of controlling reception of multi-view image data on a line block basis, the multi-view image data being encoded by a line-based codec and forming stereoscopic image data;
   a storage control step of causing the storing unit to store interpolation data that is the multi-view image data received in the reception step; and
   an image output step of outputting the predetermined amount of the interpolation data corresponding to the predetermined amount of the multi-view image data, when the number of errors in image data of at least one viewpoint in the predetermined amount of the multi-view image data received in the reception step is equal to or larger than a first threshold value, the predetermined amount of the interpolation data being stored in the storing unit and having a smaller number of errors than a second threshold value.

### REFERENCE SIGNS LIST

20 physical layer Rx, 32 relay device, 101 reception data analyzing unit, 102 data storing unit, 105 line-based multiple data link managing unit, 106 image data input switching unit, 122 relay device, 191 line-based multiple data link managing unit, 192 image data input switching unit, 193 image rate change requesting unit, 202 relay device, 240 image data input switching unit, 242 generating unit, 244 audio data input switching unit, 301 reception data analyzing unit, 302 line-based multiple data link managing unit, 351 reception data analyzing unit, 352 line-based multiple data link managing unit, 353 image data input switching unit

## Claims

1. An information processing apparatus comprising:
a receiving unit configured to receive multi-view image data on a line block basis, the multi-view image data being encoded by a line-based codec and forming stereoscopic image data;
a storing unit configured to store interpolation data, the interpolation data being the multi-view image data received by the receiving unit; and
an image output unit configured to output the predetermined amount of the interpolation data corresponding to the predetermined amount of multi-view image data when the number of errors in image data of at least one viewpoint in the predetermined amount of the multi-view image data received by the receiving unit is equal to or larger than a first threshold value, the predetermined amount of the interpolation data being stored in the storing unit, the number of errors in the predetermined amount of the interpolation data being smaller than a second threshold value.

2. The information processing apparatus according to claim 1, further comprising:
a managing unit configured to manage a table in which the number of errors in a predetermined amount of image data of each of the viewpoints is registered,
wherein, based on the table, the image output unit outputs the interpolation data.

3. The information processing apparatus according to claim 1, wherein, when all the numbers of errors in the predetermined amount of the multi-view image data received by the receiving unit are smaller than the first threshold value, the image output unit outputs the predetermined amount of the multi-view image data.

4. The information processing apparatus according to claim 1, wherein, when the number of errors in image data of at least one viewpoint in the predetermined amount of the multi-view image data is equal to or larger than the first threshold value, or when a value of arrival time of image data is equal to or larger than a third threshold value, the image output unit outputs the predetermined amount of the interpolation data corresponding to the predetermined amount of the multi-view image data, the predetermined amount of the interpolation data being stored in the storing unit, the predetermined amount of the interpolation data having a smaller number of errors than the second threshold value and having a smaller value of arrival time than a fourth threshold value.

5. The information processing apparatus according to claim 4, wherein, when all the numbers of errors in the predetermined amount of the multi-view image data are smaller than the first threshold value and all the values of arrival times of the image data are smaller than the third threshold value, the image output unit outputs the predetermined amount of the multi-view image data.

6. The information processing apparatus according to claim 1, further comprising:
an inserting unit that inserts dummy data to a portion of the multi-view image data when there is an error in image data of at least one viewpoint in the multi-view image data received by the imaging unit, the portion corresponding to the portion having the error,
wherein, when all the numbers of errors are smaller than the first threshold value, the image output unit outputs the predetermined amount of the multi-view image data having the dummy data inserted thereto by the inserting unit.

7. The information processing apparatus according to claim 1, wherein the storing unit stores image data each having a smaller number of errors than the second threshold value out of the multi-view image data received by the receiving unit.

8. The information processing apparatus according to claim 1, further comprising:
a requesting unit configured to request a change of information about encoding or communication of image data, when the number of errors in the image data of at least one viewpoint in the predetermined amount of the multi-view image data received by the receiving unit is larger than a third threshold value.

9. The information processing apparatus according to claim 1, further comprising:
a generating unit configured to generate mute data for muting sound; and
an audio output unit configured to output the mute data,
wherein the receiving unit receives audio data corresponding to the stereoscopic image data, and
when the predetermined amount of the multi-view image data is output from the image output unit, the audio output unit outputs the audio data corresponding to the image data, and when the predetermined amount of the interpolation data is output from the image output unit, the audio output unit outputs the mute data.

10. The information processing apparatus according to claim 1, further comprising:
a detecting unit configured to detect a scene change or channel switching of the image data,
wherein, while parameter information about the multi-view image data of the first picture after the scene change or channel switching is being collected, the image output unit outputs the interpolation data.

11. The information processing apparatus according to claim 1, further comprising:
a parallax detecting unit configured to detect a parallax of the predetermined amount of the stereoscopic image data,
wherein, based on the parallax, when the parallax is small, the number of errors in image data of at least one viewpoint in the predetermined amount of multi-view image data is equal to or larger than the first threshold value, and the number of errors in image data of at least one viewpoint is smaller than the first threshold value, the image output unit generates the predetermined amount of image data of another viewpoint by using the predetermined amount of the image data of the at least one viewpoint having the smaller number of errors than the first threshold value, and outputs the predetermined amount of the multi-view image data obtained as a result of the generation.

12. An information processing method implemented by an information processing apparatus including a storing unit,
the information processing method comprising:
a reception control step of controlling reception of multi-view image data on a line block basis, the multi-view image data being encoded by a line-based codec and forming stereoscopic image data;
a storage control step of causing the storing unit to store interpolation data, the interpolation data being the multi-view image data received through the reception step; and
an image output step of outputting the predetermined amount of the interpolation data corresponding to the predetermined amount of the multi-view image data when the number of errors in image data of at least one viewpoint in the predetermined amount of the multi-view image data received through the reception step is equal to or larger than a first threshold value, the predetermined amount of the interpolation data being stored in the storing unit and having a smaller number of errors than a second threshold value.
